# EUROPÄISCHE PATENTSCHRIFT

(11) **EP 1 740 631 B1**
(45) Veröffentlichungstag und Bekanntmachung des Hinweises auf die Patenterteilung: **21.07.2010**
(21) Anmeldenummer: 05715487.4
(22) Anmeldetag: 24.02.2005
(51) Int. Cl.: C08F 265/06, C10M 107/28, C10M 145/14

(54) **POLYMERE MIT H-BRÜCKEN BILDENDEN FUNKTIONALITÄTEN**
POLYMERS WITH H-BRIDGE FORMING FUNCTIONALITIES
POLYMERES A FONCTIONNALITES FORMANT DES PONTS H

(30) Priorität: 08.04.2004 DE 102004018093
(43) Veröffentlichungstag der Anmeldung: 10.01.2007
(73) Patentinhaber: Evonik RohMax Additives GmbH, 64293 Darmstadt (DE)
(72) Erfinder: SCHERER, Markus, 50733 Köln (DE); HEDRICH, Klaus, 64405 Fischbachtal (DE); TSCHEPAT, Wolfgang, 64291 Darmstadt (DE)
(86) Internationale Anmeldenummer: PCT/EP2005/001904
(87) Internationale Veröffentlichungsnummer: WO 2005/097855

(56) Entgegenhaltungen:
- EP-A- 0 348 565
- EP-A- 0 711 790
- US-A- 3 562 091
- US-A- 3 970 725
- US-A- 4 618 439

## Beschreibung

### Gebiet der Erfindung

Die vorliegende Anmeldung betrifft Pfropfcopolymere, die aus radikalisch polymerisierbaren Monomeren aufgebaut sind und die neben langkettig alkylsubstituierten ethylenisch ungesättigten Verbindungen, insbesondere Acrylaten oder Methacrylaten, zusätzlich noch Monomere mit Wasserstoffbrücken-Donator-Funktionen enthalten. Das Monomer mit Wasserstoffbrückendonator-Eigenschaft befindet sich gemäß der Erfindung sowohl im Polymerbackbone als auch in den gepfropften Seitenästen. Neben Polymeren, die Monomere mit Wasserstoffbrücken-Donator-Funktion enthalten, werden auch solche offenbart, die Monomere enthalten, die gleichzeitig Wasserstoffbrücken-Donator- und Wasserstoffbrücken-Akzeptor-Funktionen tragen. Die Polymere eignen sich insbesondere als Zusätze für Schmierölformulierungen. Es wurde gefunden, dass die Wasserstoffbrücken-Donator-Funktionen im Polymer, insbesondere aber das gleichzeitige Vorliegen von Wasserstoffbrücken-Donator-und Akzeptor-Funktionen positive Auswirkungen auf Verschleißschutz, Detergier- und Dispergierwirkung haben.

### Stand der Technik

Polyalkylacrylate sind gängige polymere Additive für Schmierölformulierungen. Lange Alkylketten (typische Kettenlänge: C8-C18) in den Esterfunktionalitäten der Acrylatmonomere verleihen Polyalkylacrylaten eine gute Löslichkeit in apolaren Solventien, wie z.B. Mineralöl. Gängige Einsatzfelder der Additive sind Hydraulik-, Getriebe- oder Motorenöle. Den Polymeren kommt eine Viskositätsindex (VI)-optimierende Wirkung zu, woher auch der Name VI-Verbesserer stammt. Ein hoher Viskositätsindex bedeutet, dass ein Öl bei hohen Temperaturen (z.B. in einem typischen Bereich von 70-140°C) eine relativ hohe sowie bei niedrigen Temperaturen (z.B. in einem typischen Bereich von -60 - 20°C) eine relativ niedrige Viskosität besitzt. Die verbesserte Schmierfähigkeit eines Öles bei hohen Temperaturen gegenüber einem nicht Polyacrylat-haltigen Öl, welches bei beispielsweise 40°C eine ansonsten identische kinematische Viskosität aufweist, ist bedingt durch eine höhere Viskosität im erhöhten Temperaturbereich. Gleichzeitig ist im Falle der Benutzung eines VI-Verbesserers bei niedrigerer Temperatur, wie sie beispielsweise während der Kaltstartphase eines Motors vorliegt, eine niedrigere Viskosität im Vergleich zu einem Öl, welches bei 100°C ansonsten eine gleiche kinematische Viskosität besitzt, zu verzeichnen. Bedingt durch die niedrigere Viskosität des Öles während der Anlaufphase eines Motors ist ein Kaltstart somit wesentlich erleichtert.

In jüngster Zeit haben sich in der Schmierstoffindustrie Polyacrylat-Systeme etabliert, welche neben VI-Optimierung zusätzliche Eigenschaften wie z. B. Dispergierwirkung bereitstellen. Solche Polymere bewirken u. a. entweder alleine oder zusammen mit speziell für Dispergierzwecke eingesetzten Dispersant-Inhibitor (DI)-Additiven, dass die durch Beanspruchung an das Öl anfallenden Oxidationsprodukte weniger zu einem nachteiligen Viskositätsanstieg beitragen. Mittels verbesserter Dispergierfähigkeit lässt sich die Lebensdauer eines Schmieröles ausdehnen. Ebenso bewirken solche Additive über ihre detergierende Wirkung, dass die Motorensauberkeit, beispielsweise ausgedrückt durch die Kolbensauberkeit bzw. Ringstecken, positiv beeinflusst wird. Oxidationsprodukte sind beispielsweise Ruß oder Schlamm. Um Polyacrylaten Dispergierwirkung zu verleihen, können Stickstoff enthaltende Funktionalitäten in die Seitenketten der Polymere eingebaut werden. Gängige Systeme sind Polymere, welche teilweise aminfunktionalisierte Esterseitenketten tragen. Oftmals werden Dialkylamin substituierte Methacrylate, deren Methacrylamid-Analoga oder N-heterozyklische Vinylverbindungen als Comonomere zur Verbesserung des Dispergiervermögens eingesetzt. Eine weitere Klasse von Monomertypen, welche aufgrund ihrer Dispergierwirkung in Schmierstoffen Erwähnung finden sollen, sind Acrylate mit ethoxylat- oder propoxylathaltigen Funktionen in den Estersubstituenten. Die dispergierfähigen Monomere können entweder statistisch im Polymer vorliegen, werden also im Sinne einer klassischen CoPolymerisation in das Polymer eingebaut, oder aber auf ein Polyacrylat aufgepfropft werden, woraus nicht statistisch aufgebaute Systeme resultieren.

Eine gezielte Forschung nach Polyacrylaten, welche neben den bekannten Vorteilen in Bezug auf Dispergier- Detergierwirkung auch Vorteile in Bezug auf Verschleißreduzierung bieten, fand bisher nicht statt.

EP 164 807 (Agip Petroli S.p.A)) beschreibt einen multifunktionellen VI-Verbesserer mit Dispergier-, Detergier- sowie Tieftemperaturwirkung. Die Zusammensetzung der VI-Verbesserer entspricht NVP bepfropften Polyacrylaten, welche zusätzlich aufwendig herzustellende Acrylate mit aminhaltigen Ethoxylatresten enthalten.

Die DE-OS 1 594 612 (Shell Int. Research Maatschappij N.V.) offenbart Schmierölgemische, die öllösliche Polymerisate mit Carboxylgruppen, Hydroxylgruppen und/oder stickstoffhaltigen Gruppen und einem dispergierten Salz oder Hydroxid eines Erdalkalimetalls enthalten. Durch synergistische Wirkweise dieser Komponenten wird eine verschleißreduzierende Wirkung beobachtet.

US-P 3153640 (Shell Oil Comp.) umfasst Copolymere bestehend aus langkettigen Estern der (Meth)acrylsäure und N-Vinyl-lactamen, die einen vorteilhaften Einfluß auf Verschleiß in Schmieranwendungen zeigen. Die beschriebenen Polymere sind statistische Copolymere. Monomere mit H-Brücken-Donator-Funktion sowie Pfropfcopolymere werden nicht erwähnt. E.H. Okrent beschreibt in den ASLE Transactions (1961, 4, 97-108), dass Polyisobutylene oder Polyacrylate eingesetzt als VI-Verbesserer Einfluß auf das Verschleißverhalten im Motor haben. Rückschlüsse auf die verwendete Chemie und die spezielle Zusammensetzung der Polymere werden nicht gemacht. Eine verschleißvermindernde Wirkung wird lediglich mit viskoelastischen Effekten polymerisathaltiger Öle begründet. So wurden beispielsweise keine Unterschiede in Einfluß auf Verschleiß zwischen Polyacrylat und PIB enthaltenden Ölen festgestellt.

Literaturveröffentlichungen von Neudörfl und Schödel (Schmierungstechnik 1976, 7, 240-243; SAE Paper 760269; SAE Paper 700054; Die Angewandte Makromolekulare Chemie 1970, 2, 175-188) heben vor allem auf den Einfluß der Polymerkonzentration auf den Motorenverschleiß ab. Es wird auf den zuvor erwähnten Artikel von E.H. Okrent verwiesen und in Analogie zu Okrent eine verschleißverbesserende Wirkung nicht mit der Chemie des Polymeren in Verbindung gebracht. Generell wird geschlußfolgert, dass Viskositätsindexverbesserer niedrigeren Molekulargewichts verbesserte Verschleißergebnisse erbringen

Wie schon Neudörfl und Schödel schreibt K Yoshida (Tribology Transactions 1990, 33, 229-237) Effekte von Polymeren auf das Verschleißverhalten lediglich viskometrischen Aspekten zu. Vorteilhafte Effekte werden mit der bevorzugten Tendenz zur elastohydrodynamischen Filmbildung erklärt.

Die im Stand der Technik bekannten Polymerisate werden fast ausnahmslos von Monomeren gebildet, deren dispergierende Funktionalitäten Gruppen tragen, die Wasserstoff-Brückenakzeptor (im folgenden H-Brückenakzeptor genannt) sind, oder wie Dimethylaminopropylmethacrylamid sowohl eine Funktionalität mit Wasserstoff-Brückenakzeptor als auch eine Funktionalität mit Wasserstoff-Brückendonator (im folgenden H-Brückendonator genannt) besitzen. Es ist ein weiteres Merkmal solcher für Motorenölanwendungen in Frage kommender Polymere, dass die N-Heterozyklus tragenden Monomere bevorzugt auf den Polymerbackbone aufgepfropft wurden. Polymere enthaltend Dimethylaminopropylmethacrylamid sind hingegen statistische Copolymere und keine Pfropfcopolymere.

Aufgabe der vorliegenden Erfindung war es daher, neue Pfropfcopolymere, enthaltend Monomere mit H-Brücken-Donator-Funktionen zur Verfügung zu stellen,

Multifunktionelle VI-Verbesserer zur Verfügung zu stellen, die sich in Schmierölformulierungen neben ihrer VI-Wirkung durch ihre Dispergierwirkung und/oder Detergierwirkung auszeichnen,

Multifunktionelle VI-Verbesserer zur Verfügung zu stellen, die sich in Schmierölformulierungen neben ihrer VI-Wirkung durch ihren positiven Einfluss auf Verschleißverhalten auszeichnen,

Ein universell anwendbares Verfahren zur Herstellung von Pfropfcopolymeren, enthaltend gepfropfte Monomere mit H-Brücken-Donator-Funktionen, zur Verfügung zu stellen. Insbesondere sollte es möglich sein, homogene, klar aussehende Polymerlösungen durch Pfropfung von Monomeren mit H-Brücken-Donator-Funktionen herzustellen.

Schmiermittel, enthaltend die erfindungsgemäßen Pfropfcopolymere mit verbesserten Eigenschaften in Bezug auf Verschleißschutz, Dispergier- und Detergierwirkung, Korrosionsverhalten und Oxidationsbeständigkeit zur Verfügung zu stellen.

Diese Aufgaben, sowie weitere nicht explizit genannten Aufgaben, die jedoch aus den hierin einleitend diskutierten Zusammenhängen ohne weiteres ableitbar oder erschließbar sind, werden gelöst durch ein konzentrat als Schmieröladditiv, das dadurch gekennzeichnet ist, dass as 15 bis 85 Gew.-% eines oder mehrere Pfrepfeopolymere enthält, enthaltend in der Hauptkette radikalisch polymerisierte Einheiten von
a) 0,01 bis 15 Gew.% einer Verbindung der Formel (I) 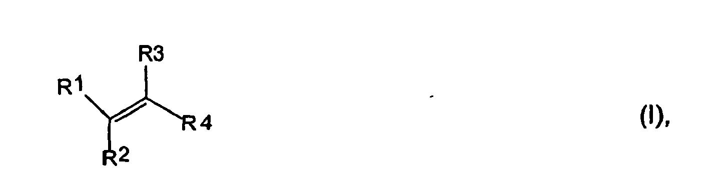 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist, und
b) 0 bis 40 Gew.-%, eines oder mehrerer (Meth)acrylate der Formel (II) 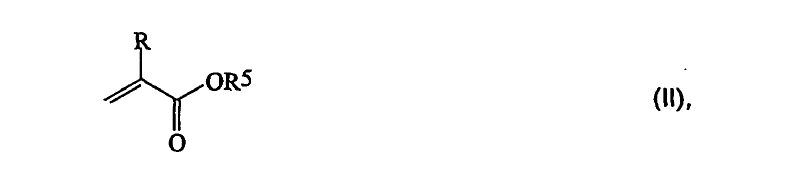 worin R Wasserstoff oder Methyl und R⁵ einen linearen oder verzweigten Alkylrest mit 1 bis 5 Kohlenstoffatomen bedeuten,
c) 35 bis 99,99 Gew.-% einer oder mehrerer ethylenisch ungesättigter Esterverbindungen der Formel (III) 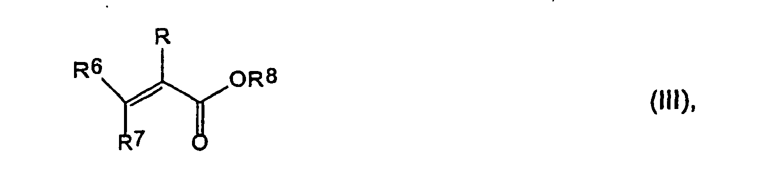 worin R Wasserstoff oder Methyl, R⁸ einen linearen, cyclischen oder verzweigten Alkylrest mit 6 bis 40 Kohlenstoffatomen, R⁶ und R⁷ unabhängig Wasserstoff oder eine Gruppe der Formel -COOR⁹ bedeuten, wobei R⁹ Wasserstoff oder einen linearen, cyclischen oder verzweigten Alkylrest mit 6 bis 40 Kohlenstoffatomen darstellt, aufweisen, und
d) 0 bis 40 Gew.-% eines oder mehrerer Comonomere,
   wobei sich die Angabe Gew.-% der vorstehenden Komponenten auf das Gesamtgewicht der ethylenisch ungesättigten Monomere der Hauptkette bezieht und wobei auf die Hauptkette des Copolymers
a') 0,01 bis 25 Gew.-%, bezogen auf das Gesamtgewicht des Copolymers,
   einer Verbindung der Formel (I) 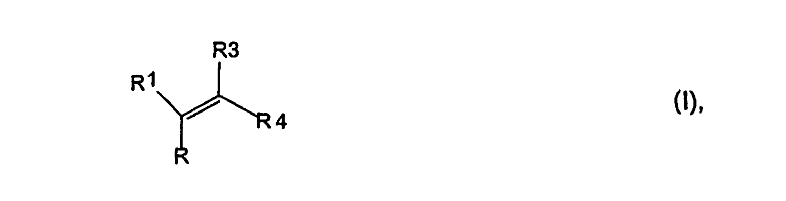 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist, und
b') 0 bis 20 Gew.-% .-%, bezogen auf das Gesamtgewicht des Copolymers, einer oder mehrerer Verbindungen der Formel (IV) gepfropft werden 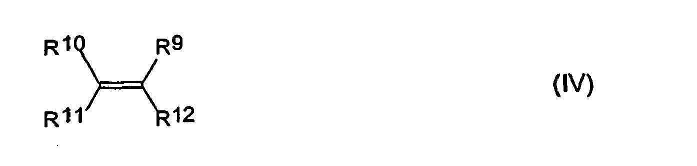 worin R⁹, R¹⁰ und R¹¹ unabhängig voneinander Wasserstoff oder eine Alkylgruppe mit 1 bis 5 Kohlenstoffatomen sein können
   und R¹² entweder
   eine Gruppe C(O)OR¹³ darstellt und R¹³ einen mit mindestens einer - NR¹⁴R¹⁵-Gruppe substituierten linearen oder verzweigten Alkylrest mit 2 bis 20, vorzugsweise 2 bis 6 Kohlenstoffatomen bedeuten, wobei R¹⁴ und R¹⁵ unabhängig von einander für Wasserstoff, einen Alkylrest mit 1 bis 20, vorzugsweise 1 bis 6 stehen oder worin R¹⁴ und R¹⁵ unter Einbeziehung des Stickstoffatoms und gegebenenfalls eines weiteren Stickstoff- oder Sauerstoffatoms einen 5- oder 6-gliederigen Ring bilden, der gegebenenfalls mit C₁-C₆-Alkyl substituiert sein kann,
   oder R¹² eine Gruppe NR¹⁶C(=O)R¹⁷ darstellt, wobei R¹⁶ und R¹⁷ zusammen eine Alkylengruppe mit 2 bis 6 vorzugsweise 2 bis 4 Kohlenstoffatomen bilden, wobei sie einen 4 bis 8-gliedrigen, vorzugsweise 4 bis 6-gliedrigen gesättigten oder ungesättigten Ring bilden, gegebenenfalls unter Einbeziehung eines weiteren Stickstoff oder Sauerstoffatoms , wobei dieser Ring noch gegebenenfalls mit C₁-C₆-Alkyl substituiert sein kann,
oder eine oder mehrere der Verbindungen: 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiopen, Vinylthiolan, Vinylthiazole und hydrierte Vinylthiazole, Vinyloxazole und hydrierte Vinyloxazole gepfropft werden.

Zweckmäßige Abwandlungen der erfindungsgemäßen Pfropfcopolymere werden in den auf Anspruch 1 rückbezogenen Unteransprüchen unter Schutz gestellt. Hinsichtlich des Verfahrens zur Herstellung von Pfropfcopolymeren liefern die Ansprüche 11 bis 15 Lösungen der zugrunde liegenden Aufgaben, während die Ansprüche 17 bis 18 eine Schmierölzusammensetzung unter Verwendung der gemäß dem vorliegenden Verfahren hergestellten Pfropfcopolymere sowie deren bevorzugte Verwendungen schützt.

### Vorteile der Erfindung

Die erfindungsgemäßen Polymere mit Wasserstoffbrücken-Donator-Funktionen im Polymer, insbesondere die Polymere mit gleichzeitigem Vorliegen von Wasserstoffbrücken-Donator-und Akzeptor-Funktionen besitzen positive Auswirkungen auf Verschleißschutz, Detergier- und Dispergierwirkung der mit ihnen hergestellten Schmierölformulierungen. Die Polymere stellen daher eine verschleißvermindernde Alternative oder Ergänzung zu den in der Industrie üblichen phosphor- und schwefelhaltigen Additiven dar und helfen, deren bekannte Nachteile zu vermeiden.

Insbesondere wirken sich die erzielten Vorteile im Verschleißverhalten positiv auf den Energieverbrauch z.B. eines Diesel- oder Ottomotors aus.

Die unter Verwendung der erfindungsgemäßen Pfropfcopolymere hergestellten Formulierungen zeichnen sich durch gutes Korrosionsverhalten sowie gute Oxidationsbeständigkeit aus.

Die kinematische Viskosität von Polymerlösungen, welche erfindungsgemäß gepfropfte Methacrylsäure enthält, ist wesentlich erniedrigt gegenüber dem vergleichbaren Polymer, welches ausschließlich Methacrylsäure im Polymerbackbone enthält.

Das offenbarte Verfahren zur Herstellung von Pfropfcopolymeren führt zu homogenen, klar aussehenden Polymerlösungen und belegt, dass das hierin vorgestellte Syntheseprinzip von universellem Charakter ist, also nicht nur auf die Pfropfung von Carbonsäuren, sondern beispielsweise auch mit Carbonsäureamiden anwendbar ist.

Zugleich lassen sich durch das erfindungsgemäße Verfahren eine Reihe weiterer Vorteile erzielen. Hierzu gehören unter anderem:
⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.
⇒ Das erfindungsgemäße Verfahren ist arm an Nebenreaktionen.
⇒ Das Verfahren ist kostengünstig durchführbar.
⇒ Mit Hilfe des erfindungsgemäßen Verfahrens lassen sich hohe Ausbeuten erzielen.
⇒ Mit Hilfe des Verfahrens der vorliegenden Erfindung können Polymere mit einem vorher definierten Aufbau und gezielter Struktur hergestellt werden.

Die bisher in Motorenölen eingesetzten Polymere mit VI- und Dispergierwirkung enthalten wie zuvor erörtert bevorzugt Monomertypen mit H-Brücken-Akzeptor-Funktionalitäten, welche insbesondere N-Heterozyklen sind. Es war daher nicht ohne weites vorhersehbar, dass der Einsatz von Monomeren mit H-Brücken-Donatoreigenschaften zu Polymeren führt, die die beschriebenen verbesserten Eigenschaften besitzen.

Nachdem es aus dem Stand der Technik bekannt ist, dass sich die Pfropfung von Monomeren mit H-Brücken-Donator-Funktionen auf Polyalkylacrylate generell schwierig gestaltet, war es nicht ohne weiteres vorhersehbar, dass sich die Pfropfung dieses Monomertyps auf Polyacrylate dann problemlos und breit anwendbar erreichen lässt, wenn vor der Pfropfung ein geringer Teil eines dieser Monomere durch Polymerisation in die Hauptkette des Polyacrylats eingebaut wurde. Es war insbesondere überraschend, dass sogar die mehrfach hintereinander durchgeführte Pfropfung möglich war, ohne es dass hierdurch zum Entstehen nicht verwertbarer Produkte kam. Dies insbesondere vor dem Hintergrund, dass entsprechende Syntheseversuche gemäß dem Stand der Technik inhomogene, trüb aussehende Produkte liefern.

### Detaillierte Beschreibung der Erfindung

Die Pfropfcopolymere enthalten als Komponente eine oder mehrerer Verbindungen der Formel (I) 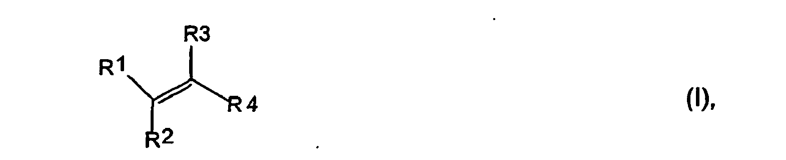 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist.

Die Definition einer Funktionalität als Gruppe mit Wasserstoff-Brückenakzeptor- oder Wasserstoff-Brückendonator-Wirkung kann der gängigen Literatur bzw. bekannten chemischen Nachschlagwerken wie beispielsweise "Römpp Lexikon Chemie, 10. Auflage, 1999, Verlag Thieme Stuttgart New York" entnommen werden.

Eine Wasserstoff-Brückenverbindung (H-Brückenverbindung, WasserstoffBindung, Wasserstoff-Brücke) ist hiernach eine wichtige Form von Nebenvalenzbindung, die sich zwischen einem an ein Atom eines elektronegativen Elements (Wasserstoffbrücken-Donator, Protonen-Donator, X) kovalent gebundenen Wasserstoff-Atom und dem einsamen Elektronenpaar eines anderen elektronegativen Atoms (Protonen-Akzeptor, Y) ausbildet. Im allgemeinen formuliert man ein solches System als RX-H···YR', wobei die punktierte Linie die Wasserstoffbrücke symbolisiert. Als X u. Y kommen hauptsächlich O, N, S u. Halogene in Frage. In manchen Fällen (z. B. HCN) kann auch C als Protonen-Donator fungieren. Die Polarität der kovalenten Bindung des Donators bedingt eine positive Teilladung, δ⁺, des Wasserstoffs (Protons), während das Akzeptoratom eine entsprechende negative Teilladung, δ⁻, trägt.

Charakteristische, strukturelle und spektroskopische Eigenschaften eines über eine Wasserstoffbrücke gebundenen Komplexes sind:
a) der Abstand Γ_{HY} ist deutlich kleiner als die Summe der Van-der-Waalsschen Radien der Atome H u. Y.
b) Der XH-Gleichgewichtskernabstand wird vergrößert gegenüber dem freien Mol. RX-H.
c) die XH-Streckschwingung (Donator-Streckschwingung) erfährt eine Verschiebung zu längeren Wellenlängen ("Rotverschiebung"). Zudem nimmt ihre Intensität deutlich zu (bei stärkeren H-Brücken um mehr als eine Größenordnung).
d) infolge gegenseitiger Polarisation ist das Dipolmoment des H-Brückengebundenen Komplexes größer als dies der Vektorsumme der Dipolmomente der Bestandteile entspricht.
e) die Elektronendichte am Brücken-Wasserstoff-Atom wird bei der Ausbildung einer Wasserstoffbrücke reduziert. Dieser Effekt äußert sich experimentell in Form verringerter NMR-Verschiebungen (verminderte Abschirmung des Protons).

Bei kürzeren intermolekularen Abständen überlappen sich die Elektronenhüllen der Monomeren. Dabei kann sich eine mit einem gewissen Ladungstransfer verknüpfte chemische Bindung vom Typ einer 4-Elektronen-3-Zentren-Bindung ausbilden. Daneben liegt Austausch-Repulsion vor, da das Pauli-Prinzip Elektronen mit gleichen Spins auf Distanz hält u. verhindert, dass sich 2 Monomere zu nahe kommen.

Die Dissoziationsenergien D₀= ΔH₀ (Molare Enthalpien der Reaktion RX-H···YR' → RX-H+YR' beim absoluten Nullpunkt) liegen im allg. zwischen 1 u. 50 kJ mol^{-l}. Zu ihrer experimentellen Bestimmung werden thermochem. Messungen (2. Virialkoeffizienten, therm. Leitfähigkeiten) od. spektroskopische Untersuchungen herangezogen (mehr hierzu kann "Chem. Rev. 88, Chem. Phys. 92, 6017-6029 (1990)" entnommen werden).

Für Wasserstoffatome von Struktureinheiten, die zur Bildung von H-Brücken befähigt und ein H-Donator sind, ist es charakteristisch, dass sie an elektronegativere Atome wie beispielsweise Sauerstoff, Stickstoff, Phosphor oder Schwefel gebunden sind. Die Begriffe "elektronegativ" oder "elektropositiv" sind dem Fachmann geläufig als Bezeichnung für die Tendenz eines Atoms, in einer kovalenten Bindung das oder die Valenzelektronenpaare im Sinne einer asymmetrischen Verteilung der Elektronen an sich zu ziehen, wodurch ein Dipolmoment entsteht. Eine weitergehende Diskussion der Begriffe Elektronegativität" und "Wasserstoffbrückenbindungen" findet sich zum Beispiel in ,Advanced Organic Chemistry', J. March, 4th Edition, J. Wiley & Sons, 1992.

In manchen Dimeren wird mehr als eine Wasserstoffbrückenbindung ausgebildet, so z. B. in Dimeren von Carbonsäuren, welche cyclische Strukturen ausbilden. Cyclische Strukturen werden häufig auch in höheren Oligomeren energetisch favorisiert, z. B. in Oligomeren des Methanols ab den Trimeren. Die Dissoziationsenergie des Trimeren in 3 Monomere ist mit 52 kJ · mol⁻¹ nahezu viermal so groß wie die des Dimeren. Nichtadditivität in den Dissoziationsenergien pro Monomer ist eine typische Eigenschaft von über Wasserstoffbrücken gebundenen Komplexen.

Die vorliegende Erfindung bezieht sich im Falle H-Brücken bildender Funktionalitäten insbesondere auf Heteroatom enthaltende Gruppen, wobei das Heteroatom vorzugsweise O, N, P, oder S darstellt. Obwohl theoretisch auch eine Kohlenstoff-Wasserstoffbindung als H-Brückendonator fungieren kann, sollen solche Funktionen nicht in den Rahmen der hierin gemachten Ansprüche für Funktionalitäten mit H-Brückendonatorfunktion fallen.

Monomere mit H-Brücken-Donator-Funktionen sind beispielsweise die ethylenisch ungesättigten Carbonsäuren und alle ihre Derivate, die noch mindestens eine freie Carboxylgruppe besitzen. Beispiele hierfür sind:
Acrylsäure, Methacrylsäure, 1-[2-(Isopropenylcarbonyloxy)ethyl]-maleat (Monoester aus 2-Hydroxyethylmethacrylat (HEMA) und Maleinsäure), 1-[2-(Vinylcarbonyloxy)ethyl]-maleat (Monoester aus 2-Hydroxyethylacrylat (HEA) und Maleinsäure), 1-[2-(Isopropenylcarbonyloxy)ethyl]-succinat (Monoester aus HEMA und Bemsteinsäure), 1-[2-(Vinylcarbonyloxy)ethyl]-succinat (Monoester aus HEA und Bemsteinsäure), 1-[2-(Isopropenylcarbonyloxy)ethyl]-phtalat (Monoester aus HEMA und Phthalsäure), 1-[2-(Vinylcarbonyloxy)ethyl]-phtalat (Monoester aus HEA und Phthalsäure), 1-[2-(Isopropenylcarbonyloxy)ethyl]-hexahydrophtalat (Monoester aus HEMA und Hexahydrophthalsäure), 1-[2-(Vinylcarbonyloxy)ethyl]-hexahydrophtalat (Monoester aus HEA und Hexahydrophthalsäure), 1-[2-(Isopropenylcarbonyloxy)butyl]-maleat (Monoester aus 2-Hydroxybutylmethacrylat (HBMA) und Maleinsäure), 1-[2-(Vinylcarbonyloxy)butyl]-maleat (Monoester aus 2-Hydroxybutylacrylat (HBA) und Maleinsäure), 1-[2-(Isopropenylcarbonyloxy)butyl]-succinat (Monoester aus HBMA und Bemsteinsäure), 1-[2-(Vinylcarbonyloxy)butyl]-succinat (Monoester aus HBA und Bemsteinsäure), 1-[2-(Isopropenylcarbonyloxy)butyl]-phtalat (Monoester aus HBMA und Phthalsäure), 1-[2-(Vinylcarbonyloxy)butyl]-phtalat (Monoester aus HBA und Phthalsäure), 1-[2-(Isopropenylcarbonyloxy)butyl]-hexahydrophtalat (Monoester aus HBMA und Hexahydrophthalsäure), 1-[2-(Vinylcarbonyloxy)butyl]-hexahydrophtalat (Monoester aus HBA und Hexahydrophthalsäure), Crotonsäure, Acrylamidoglykolsäure, Methacrylamidobenzoesäure, Vinylessigsäure, 4-Methacryloxyethyltrimethylsäure, Styrolcarbonsäure.

### Besonders bevorzugt ist Acrylsäure und Methacrylsäure.

Weitere geeignete Monomere mit H-Brücken-Donator-Funktion sind Acetoacetat-funktionalisierte (z.B. LONZAMON® AAEMA der Firma Lonza) ethylenisch ungesättigte Verbindungen wie beispielsweise 2-Acetoacetoxyethylmethacrylat oder 2-Acetoacetoxyethylacrylat. Diese Verbindungen können zumindest teilweise in der tautomeren Enolform vorliegen.

Weiterhin als Monomere mit H-Brücken-Donator-Funktionen geeignet sind alle ethylenisch ungesättigten Monomere mit mindestens einer Sulfonsäuregruppe und/oder mindestens einer Phosphonsäuregruppe. Dies sind alle organische Verbindungen, die sowohl mindestens eine ethylenische Doppelbindung als auch mindestens eine Sulfonsäuregruppe und/oder mindestens eine Phosphonsäuregruppe aufweisen. Zu ihnen gehören beispielsweise:
2-(Isopropenylcarbonyloxy)-ethansulfonsäure, 2-(Vinylcarbonyloxy)-ethansulfonsäure, 2-(Isopropenylcarbonyloxy)-propylsulfonsäure, 2-(Vinylcarbonyloxy)-propylsulfonsäure, 2-Acrylamido-2-methylpropansulfonsäure, Acrylamidododecansulfonsäure, 2-Propen-1-sulfonsäure, Methallylsulfonsäure, Styrolsulfonsäure, Styroldisulfonsäure, Methacrylamidoethanphosphonsäure, Vinylphosphonsäure, 2-Phosphatoethylmethacrylat, 2-Sulfoethylmethacrylat

### Ω-Alkencarbonsäuren wie

2-Hydroxy-4-Pentensäure, 2-Methyl-4-Pentensäure, 2-n-Propyl-4-Pentensäure, 2-Isopropyl-4-Pentensäure, 2-Ethyl-4-Pentensäure, 2,2-Dimethyl-4-Pentensäure, 4-Pentensäure, 5-Hexensäure, 6-Heptensäure, 7-Octensäure, 8-Nonensäure, 9-Decensäure, 10-Undecensäure, 11-Dodecensäure, 12-Tridecensäure, 13-Tetradecensäure, 14-Pentadecensäure, 15-Hexadecensäure, 16-Heptadecensäure, 17-Octadecensäure, 22-Tricosensäure, 3-Buten-1,1-Dicarbonsäure.

Gleichfalls als Monomere geeignet sind Säureamide, von denen bekannt ist, dass sie ebenso wie die Carbonsäuren gleichzeitig sowohl als H-Brücken-Donator als auch als H-Brücken-Akzeptor wirken können. Die ungesättigten Carbonsäureamide können entweder eine unsubstituierte Amidgruppierung tragen oder eine gegebenenfalls einfach substituierte Carbonsäureamidgruppe besitzen. Geeignete Verbindungen sind zum Beispiel:
Amide der (Meth)acrylsäure sowie N-Alkylsustituierte (Meth)acrylamide, wie N-(3-Dimethylaminopropyl)methacrylamid,
N-(Diethylphosphono)methacrylamid, 1-Methacryloylamido-2-methyl-2-propanol, N-(3-Dibutylaminopropyl)methacrylamid, N-t-Butyl-N-(diethylphosphono)methacrylamid, N,N-bis(2-Diethylaminoethyl)methacrylamid, 4-Methacryloylamido-4-methyl-2-pentanol, N-(Butoxymethyl)methacrylamid, N-(Methoxymethyl)methacrylamid, N-(2-Hydroxyethyl)methacrylamid, N-Acetylmethacrylamid, N-(Dimethylaminoethyl)methacrylamid, N-Methylmethacrylamid, N-Methylacrylamid, Methacrylamid, Acrylamid N-Isopropylmethacrylamid; Aminoalkylmethacrylate, wie tris(2-Methacryloxyethyl)amin, N-Methylformamidoethylmethacrylat, N-Phenyl-N'-methacryloylhamstoff, N-Methacryloylhamstoff, 2-Ureidoethylmethacrylat; N-(2-Methacryloyloxyethyl)ethylenharnstoff, heterocyclische (Meth)acrylate, wie 2-(1-Imidazolyl)ethyl(meth)acrylat, 2-(4-Morpholinyl)ethyl(meth)acrylat, 1-(2-Methacryloyloxyethyl)-2-pyrrolidon, Furfurylmethacrylat.

Ebenso als H-Brücken-Donator geeignete Carbonsäureester sind:
2-tert-Butylaminoethylmethacrylat, N-Methylformamidoethylmethacrylat,
2-Ureidoethylmethacrylat; heterocyclische (Meth)acrylate, wie
2-(1-Imidazolyl)ethyl(meth)acrylat, 1-(2-Methacryloyloxyethyl)-2-pyrrolidon.
Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat, 1,2-Propandiol(meth)acrylat; Polyoxyethylen- und Polyoxypropylen-Derivate der (Meth)acrylsäure, wie Triethylenglycolmono(meth)acrylat, Tetraethylenglycolmono(meth)acrylat und Tetrapropylengylcolmono(meth)acrylat. Methacrylhydroxamsäure, Acrylhydroxamsäure, N-Alkylmethacrylhydroxamsäure, N-Alkylacrylhydroxamsäure, Umsetzungsprodukt von Methacryl- bzw. Acrylsäure mit Lactamen, z. B. mit Caprolactam, Umsetzungsprodukt von Methacryl- bzw. Acrylsäure mit Lactonen, z. B. mit Caprolacton; Umsetzungsprodukt von Methacryl- bzw. Acrylsäure mit Säureanhydriden; Umsetzungsprodukt von Methacrylamid bzw. Acrylamid mit Lactamen, z. B. mit Caprolactam Umsetzungsprodukt von Methacrylamid bzw. Acrylamid mit Lactonen, z. B. mit Caprolacton; Umsetzungsprodukt von Methacrylamid bzw. Acrylamid mit Säureanhydriden.

Der Gehalt der Verbindungen, die eine oder mehrere zur Bildung von H-Brücken befähigte Struktureinheiten besitzen, welche ein H-Donator ist, beträgt 0,01 bis 15 Gew.-%, bevorzugt 0,1 bis 10 Gew.-% und besonders bevorzugt 0,5 bis 8 Gew.-% bezogen auf das Gesamtgewicht der ethylenisch ungesättigten Monomere der Hauptkette des Pfropfcopolymers.

Die erfindungsgemäßen Pfropfcopolymere enthalten als weitere Komponente der Hauptkette Verbindungen der Formel II 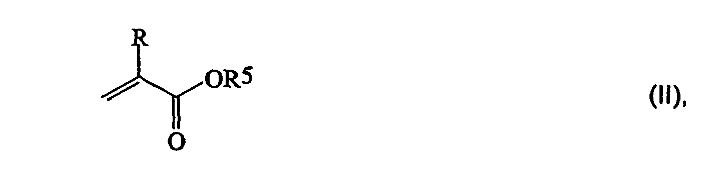 worin R Wasserstoff oder Methyl und R⁵ einen linearen oder verzweigten Alkylrest mit 1 bis 5 Kohlenstoffatomen bedeuten,

Beispiele für Komponenten der Formel II sind unter anderem (Meth)acrylate, die sich von gesättigten Alkoholen ableiten, wie
Methyl(meth)acrylat, Ethyl(meth)acrylat, n-Propyl(meth)acrylat, iso-Propyl(meth)acrylat, n-Butyl(meth)acrylat, tert-Butyl(meth)acrylat und Pentyl(meth)acrylat;
Cycloalkyl(meth)acrylate, wie Cyclopentyl(meth)acrylat;
(Meth)acrylate, die sich von ungesättigten Alkoholen ableiten, wie 2-Propinyl(meth)acrylat und Allyl(meth)acrylat, Vinyl(meth)acrylat.

Der Gehalt der (Meth)acrylate der Formel (II) beträgt 0 bis 40 Gew.-%,
0,1 bis 30 Gew.-% oder 1 bis 20 Gew.-% bezogen auf das Gesamtgewicht der ethylenisch ungesättigten Monomere der Hauptkette des Pfropfcopolymers

Die erfindungsgemäßen Pfropfcopolymere enthalten als weitere Komponente der Hauptkette eine oder mehrere der ethylenisch ungesättigten Esterverbindungen der Formel III 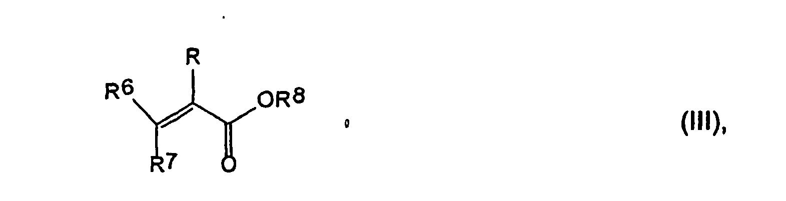 worin R Wasserstoff oder Methyl, R⁸ einen linearen, cyclischen oder verzweigten Alkylrest mit 6 bis 40 Kohlenstoffatomen, R⁶ und R⁷ unabhängig Wasserstoff oder eine Gruppe der Formel -COOR⁸ bedeuten, wobei R⁸ Wasserstoff oder einen linearen, cyclischen oder verzweigten Alkylrest mit 6 bis 40 Kohlenstoffatomen darstellt, aufweisen.

Zu diesen Verbindungen gemäß Formel (III) gehören (Meth)acrylate, Maleate und Fumarate, die jeweils mindestens einen Alkoholrest mit 6 bis 40 Kohlenstoffatomen aufweisen.

Hierbei sind (Meth)acrylate der Formel (IIIa) bevorzugt 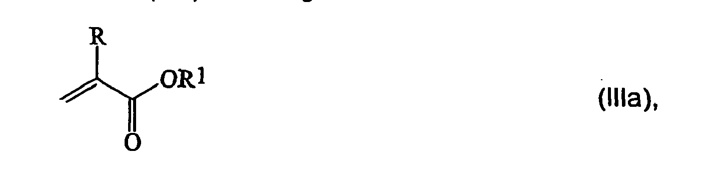 worin
R Wasserstoff oder Methyl und R¹ einen linearen oder verzweigten Alkylrest mit 6 bis 40 Kohlenstoffatomen bedeuten.

Wenn im Rahmen der vorliegenden Anmeldung der Ausdruck (Meth)acrylate benutzt wird, so umfaßt dieser Begriff jeweils Methacrylate oder Acrylate alleine oder auch Mischungen aus beiden. Diese Monomere sind weithin bekannt. Zu diesen gehören unter anderem (Meth)acrylate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
(Meth)acrylate, die sich von ungesättigten Alkoholen ableiten, wie z. B. Oleyl(meth)acrylat;
Cycloalkyl(meth)acrylate, wie 3-Vinylcyclohexyl(meth)acrylat, Cyclohexyl(meth)acrylat, Bornyl(meth)acrylat.

Die Esterverbindungen mit langkettigem Alkoholrest lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Sasol; Epal® 610 und Epal® 810 von Ethyl Corporation; Linevol® 79, Linevol® 911 und Dobanol® 25L der Shell; Lial 125® von Sasol; Dehydad® und Lorol®-Typen von Henkel KGaA sowie Linopol® 7-11 und Acropol® 91.

Der langkettige Alkylrest der (Meth)acrylate der Formel III besitzt im allgemeinen 6 bis 40 Kohlenstoffatome, vorzugsweise 6 bis 24 Kohlenstoffatome, besonders bevorzugt 8 bis 18 Kohlenstoffatome und kann linear, verzweigt, gemischt linear/verzweigt oder mit cyclischen Anteilen sein. Die bevorzugte Ausführungsweise besteht darin, dass als Methacrylate eine Mischung aus Methylmethacrylat und C8-C18-Alkylmethacrylaten eingesetzt wird.

Die Alkohole mit langkettigen Alkylresten, die zur Herstellung der (Meth)acrylester eingesetzt werden, sind kommerziell erhältlich und bestehen in der Regel aus mehr oder weniger breiten Mischungen verschiedener Kettenlängen. Die Angabe der Anzahl der Kohlenstoffatome bezieht sich in diesen Fällen in der Regel auf die mittlere Kohlenstoffzahl. Wenn im Rahmen der vorliegenden Anmeldung ein Alkohol bzw. ein unter Verwendung dieses Alkohols hergestellter langkettiger (Meth)acrylsäureester als ,C-12'-Alkohol oder als ,C 12'-Ester bezeichnet wird, dann wird der Alkylrest dieser Verbindungen in der Regel neben Alkylresten mit 12 Kohlenstoffatomen auch gegebenenfalls noch solche mit 8, 10, 14, oder 16 Kohlenstoffatomen in geringeren Anteilen enthalten, wobei die mittlere Kohlenstoffzahl bei 12 liegt. Wird im Rahmen der vorliegenden Anmeldung beispielsweise eine Verbindung als C12-C18-Alkylacrylat bezeichnet, so ist hiermit eine Mischung von Estern der Acrylsäure gemeint, welche dadurch gekennzeichnet ist, dass lineare und/oder verzweigte Alkylsubstituenten vorliegen und dass die Alkylsubstituenten zwischen 12 und 18 Kohlenstoffatome beinhalten.

Der Gehalt der (Meth)acrylate der Formel (III) oder (IIIa) beträgt 35 bis 99,99 Gew.-%, 40 bis 99 Gew.-% oder 50 bis 80 Gew.-% bezogen auf das Gesamtgewicht der ethylenisch ungesättigten Monomere der Hauptkette des Pfropfcopolymers.

Zum Aufbau der Hauptkette des Pfropfcopolymeren können auch noch 0 bis 40 Gew.-%, insbesondere 0,5 bis 20 Gew.-%, bezogen auf das Gesamtgewicht der ethylenisch ungesättigten Monomere der Hauptkette des Pfropfcopolymers, eines oder mehrere radikalisch polymerisierbarer weiterer Monomere beteiligt sein. Beispiele hierfür sind

Nitrile der (Meth)acrylsäure und andere stickstoffhaltige Methacrylate, wie Methacryloylamidoacetonitril, 2-Methacryloyloxyethylmethylcyanamid, Cyanomethylmethacrylat; Aryl(meth)acrylate, wie Benzylmethacrylat oder Phenylmethacrylat, wobei die Arylreste jeweils unsubstituiert oder bis zu vierfach substituiert sein können; carbonylhaltige Methacrylate, wie Oxazolidinylethylmethacrylat, N-(Methacryloyloxy)formamid, Acetonylmethacrylat, N-Methacryloylmorpholin, N-Methacryloyl-2-pyrrolidinon; Glycoldimethacrylate, wie 1,4-Butandiolmethacrylat, 2-Butoxyethylmethacrylat, 2-Ethoxyethoxymethylmethacrylat, 2-Ethoxyethylmethacrylat, Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat; Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-lodoethylmethacrylat, Chloromethylmethacrylat; Oxiranylmethacrylate, wie 2,3-Epoxybutylmethacrylat, 3,4-Epoxybutylmethacrylat, Glycidylmethacrylat; Phosphor-, Bor- und/oder Silicium-haltige Methacrylate, wie 2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat; schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid; Trimethacrylate, wie Trimethyloylpropantrimethacrylat;

Vinylhalogenide, wie beispielsweise Vinylchlorid, Unylfluorid, Vinylidenchlorid und Vinylidenfluorid;α, Vinylester, wie Vinylacetat; Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid; Fumarsäurederivate, wie beispielsweise Diester der Fumarsäure, wobei die Alkoholreste 1 bis 9 Kohlenstoffatome aufweisen;
Diene wie beispielsweise Divinylbenzol.

Radikalisch polymerisierbare α-Olefine mit 4 - 40 Kohlenstoffatomen. Beispielhaft seien als Vertreter genannt:
Buten-1, Penten-1, Hexen-1, Hepten-1, Octen-1, Nonen-1, Decen-1, Undecen-1, Dodecen-1, Tridecen-1, Tetradecen-1, Pentadecen-1, Hexadecen-1, Heptadecen-1, Octadecen-1, Nonadecen-1, Eicosen-1, Heneicosen-1, Docosen-1, Trocosen-1, Tetracosen-1, Pentacosen-1, Hexacosen-1, Heptacosen-1, Octacosen-1, Nonacosen-1, Triaconten-1, Hentriaconten-1, Dotriaconten-1, oder dergleichen. Geeignet sind ferner verzweigtkettige Alkene, wie beispielsweise Vinylcyclohexan, 3,3-Dimethylbuten-1, 3-Methylbuten-1, Diisobutylen-4-Methylpenten-1 oder dergleichen.

Ferner eignen sich Alkene-1 mit 10 bis 32 Kohlenstoffatomen, die bei der Polymerisation von Äthylen, Propylen oder Mischungen anfallen, wobei diese Materialien ihrerseits aus hydrogecrackten Materialien gewonnen werden.

Auf die Hauptkette des Copolymers werden 0,01 bis 25 Gew.-%, bezogen auf das Gesamtgewicht des Copolymers, einer Verbindung der Formel (I) gepfropft. 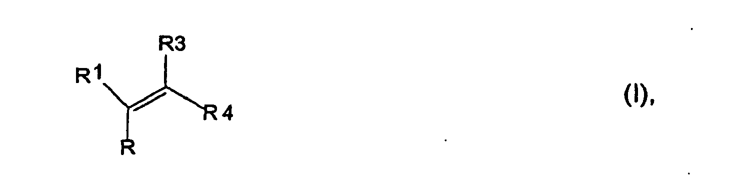 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist. In besonderen Ausführungsformen kann der Anteil der gepfropften Verbindungen der Formel (I) auch 0,1 bis 20 Gew.-%, 1 bis 15 Gew.-% oder 1 bis 10 Gew.-% betragen, jeweils bezogen auf das Gesamtgewicht des Copolymers. Die maximal mögliche Menge an Monomer, welches für die Pfropfung eingesetzt werden kann, hängt in für den Fachmann verständlicher Weise von der chemischen Natur des Monomeren ab. So wird es beispielsweise leichter möglich sein, eine Menge entsprechend dem oberen Grenzbereich der Zugabemenge in das Pfropfcopolymer einzubauen, wenn ein Dialkylaminoalkyl(meth)acrylamid eingesetzt wird, während sich die Zugabemenge von stärker polaren Monomeren wie Methacrylsäure oder Acrylsäure zweckmäßigerweise im Bereich von kleiner als 10 Gew.-% oder kleiner als 5 Gew.-% bewegen wird.

Die Struktur der Verbindungen der Formel (I) und konkrete Bespiele hierfür wurden bereits bei den Komponenten der Hauptkette ausführlich beschrieben und es wird hier ausdrücklich Bezug darauf genommen.

Die Pfropfung auf die Hauptkette kann auch gegebenenfalls noch zusätzlich mit 0 bis 20 Gew.% oder mit 0 bis 10 Gew.-%, bezogen auf das Gesamtgewicht des Copolymers, einer oder mehrerer Verbindungen der Formel (IV) durchgeführt werden 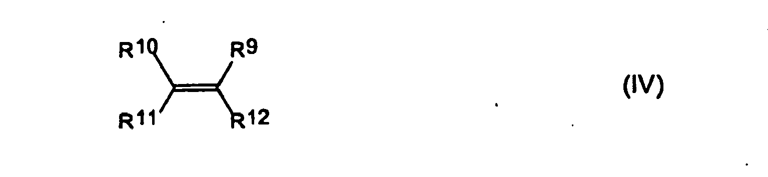 worin R⁹, R¹⁰, R¹¹ und R¹² die bereits angeführte Bedeutung besitzen.

Beispiele für Verbindungen der Formel (IV) sind unter anderem Aminoalkylmethacrylate, wie tris(2-Methacryloxyethyl)amin, N-Methylformamidoethylmethacrylat, 2-Ureidoethylmethacrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon, heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole.

### Herstellung der Polymere

Die zuvor genannten ethylenisch ungesättigten Monomere können einzeln oder als Mischungen eingesetzt werden. Es ist des weiteren möglich, die Monomerzusammensetzung während der Polymerisation zu variieren.

Grundsätzliche Polymerisationstechniken zur Herstellung der Polymeren sind an sich bekannt. So können diese Polymere insbesondere durch radikalische Polymerisation, sowie verwandte Verfahren, wie beispielsweise ATRP (=Atom Transfer Radical Polymerisation) oder RAFT (=Reversible Addition Fragmentation Chain Transfer) erfolgen.

Die übliche freie radikalische Polymerisation ist u.a. in Ullmanns's Encyclopedia of Industrial Chemistry, Sixth Edition dargelegt. Im Allgemeinen wird hierzu ein Polymerisationsinitiator eingesetzt.

Hierzu gehören unter anderem die in der Fachwelt weithin bekannten Azoinitiatoren, wie AIBN und 1, 1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 ausführlich dargestellt, worauf für Zwecke der Offenbarung ausdrücklich Bezug genommen wird.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C.

Die Polymerisation kann mit oder ohne Lösungsmittel durchgeführt werden. Der Begriff des Lösungsmittels ist hierbei weit zu verstehen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle, natürliche Öle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll. Eine Analyse von besonders bevorzugten Mineralölen, die mittels herkömmlicher Verfahren, wie Harnstofftrennung und

Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8 %,
Verlust:
   6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Diese Öle können auch als Mischungen eingesetzt werden und sind vielfach kommerziell erhältlich.

Diese Lösungsmittel werden vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt. Die Zusammensetzung kann auch polare Lösungsmittel aufweisen, wobei deren Menge jedoch dadurch begrenzt wird, daß diese Lösungsmittel keine unvertretbar nachteilige Wirkung auf die Löslichkeirt der Polymere ausüben dürfen.

Die Molekulargewichte Mw der Polymere betragen 5,000 bis 4,000,000 g/mol, insbesondere 10,000-2,000,000 g/mol und besonders bevorzugt 20,000-500,000 g/mol. Die Polydispersitäten (Mw/Mn) liegen vorzugsweise in einem Bereich von 1,2-7,0. Die Molekulargewichte können nach bekannten Methoden bestimmt werden. Beispielsweise kann die Gelpermeationschromatographie, auch bekannt unter "Size Exclusion Chromatography" (SEC) eingesetzt werden. Ebenso ist ein osmometrisches Verfahren, wie beispielsweise die "Vapour Phase Osmometry" zur Bestimmung der Molekulargewichte einsetzbar. Die genannten Verfahren sind beispielsweise beschrieben in: P.J. Flory, "Principles of Polymer Chemistry" Cornell University Press (1953), Chapter VII, 266-316 sowie "Macromeolecules, an Introduction to Polymer Science", F.A. Bovey and F.H. Winslow, Editors, Academic Press (1979), 296-312 sowie W.W. Yau, J.J. Kirkland and D.D. Bly, "Modern Size Exclusion Liquid Chromatography, John Wiley and Sons, New York, 1979. Bevorzugt zur Bestimmung der Molekulargewichte der hierin vorgestellten Polymere wird die Gelpermeationschromatographie eingesetzt. Es sollte bevorzugt gegen Polymethylacrylat- bzw. Polyacrylat-Standards gemessen werden.

Die Restmonomergehalte (z.B. C8-C18-Alkylacrylat, MMA, Methacrylsäure, NVP) wurden nach üblichen Verfahren HPLC-analytisch bestimmt. Deren Angabe wird entweder in ppm oder Gew.-% in Bezug auf das Gesamtgewicht der hergestellten Polymerlösungen gemacht. Exemplarisch für langkettig alkylsubstituierte Acrylate sei erwähnt, dass der für beispielsweise C8-C18-Alkylacrylat angegebene Restmonomergehalt sämtliche verwendeten Acrylatmonomere umfasst, welche Alkylsubstituenten in den Esterseitenketten tragen, die dadurch gekennzeichnet sind, dass sie zwischen 8 und 18 Kohlenstoffatome beinhalten.

Bei den in der vorliegenden Erfindung beschriebenen Synthesen handelt es sich um die Herstellung von Polymerlösungen ohne hiermit einzuschränken, dass die beschriebenen Synthesen nicht lösemittelfrei vorgenommen werden können. Die angegebenen kinematischen Viskositäten beziehen sich dementsprechend auf die Polymerlösungen und nicht auf die reinen, isolierten Polymere. Der Begriff "Verdickungswirkung" bezieht sich auf die kinematische Viskosität einer Polymerlösung, die durch Verdünnung einer bestimmten Menge der Polymerlösung mit einem weiteren Lösemittel bei einer bestimmten Temperatur gemessen wird. Üblicherweise werden 10-15 Gew.-% der jeweils hergestellten Polymerlösung in einem 150N-ÖI verdünnt und die kinematischen Viskositäten der resultierenden Lösung bei 40°C bzw. 100°C bestimmt. Die Bestimmung der kinematischen Viskositäten erfolgt nach üblichen Verfahren, z.B. im Ubbelohde-Viskosimeter oder in automatischen Messvorrichtungen der Firma Herzog. Die Angabe der kinematischen Viskositäten erfolgt immer in mm²/s_{.}

Das Verfahren zur Herstellung der Pfropfcopolymere der vorliegenden Erfindung ist dadurch gekennzeichnet, dass im ersten Schritt die Hauptkette durch radikalische Polymerisation der Monomere a), c) und gegebenenfalls b) und/oder d) hergestellt wird und dass dann im zweiten Schritt eine weitere Menge eines oder mehrerer Monomere der Formel (I) auf die Hauptkette gepfropft wird.

Die Pfropfcopolymeren werden also hergestellt, indem die Monomere, die eine oder mehrere zur Bildung von H-Brücken befähigte Struktureinheiten besitzen, welche ein H-Donator ist, nicht nur im Pfropfprozess eingesetzt werden, sondern bereits zu einem geringen Anteil zum Aufbau der Hauptkette des Pfropfcopolymeren, die oft auch als Polymerbackbone bezeichnet wird, verwendet werden. Eine vorteilhafte Vorgehensweise kann z. B. darin bestehen, dass 1, 2, 3 oder 5 Gew.-%, bezogen auf das Gesamtgewicht der ethylenisch ungesättigten Monomere der Hauptkette, eines Monomeren mit einer Gruppe, die eine oder mehrere zur Bildung von H-Brücken befähigte Struktureinheiten besitzt und ein H-Donator ist, durch radikalische Polymerisation in ein Acrylatcopolymer eingebaut wird, und dass dann eine Pfropfung mit beispielsweise weiteren 1, 2, 3 oder 5 Gew.% des gleichen Monomers oder einer anderen Verbindung der Formel (I) folgt.

Ein besonders geeignetes Monomer zur Anwendung gemäß vorstehend beschriebener Vorgehensweise ist Methacrylsäure.

Die zur Pfropfung verwendeten Monomere mit H-Brücken-Donator-Funktionalitäten sowie die bereits zum Aufbau der Hauptpolymerkette verwendeten Monomere mit H-Brücken-Donator-Funktionalitäten müssen sich nicht unbedingt entsprechen. So können gemäß der vorliegenden Erfindung Polymere erhalten werden, in welchen gegebenenfalls auch verschiedene Monomeren mit H-Brücken-Donator-Funktionalitäten zum Aufbau der Polymerhauptkette und/oder zum Pfropfschritt eingesetzt werden.

In einer vorteilhaften Ausführungsform des Verfahren zur Herstellung von Pfropfcopolymeren wird nach der Pfropfung eines oder mehrerer Monomere der Formel (I) ein weiterer Pfropfprozess mit einem oder mehreren Monomeren der Formel (IV) durchgeführt, welches dann gegebenenfalls auch ein Monomer sein kann, das keine zur Bildung von H-Brücken befähigte Struktureinheiten besitzen muss.

Es ist ebenfalls möglich, die zuvor beschriebene Reihenfolge der Pfropfschritte zu vertauschen. In dieser Ausführungsform des Verfahrens zur Herstellung von Pfropfcopolymeren wird nach der Polymerisation der Hauptkette zunächst ein Pfropfprozess mit einem oder mehreren Monomeren der Formel (IV) durchgeführt, gefolgt von einem weiteren Pfropfprozess mit einem oder mehreren Monomeren der Formel (I).

Das vorliegende Verfahren zur Herstellung der Pfropfcopolymeren kann auch vorteilhaft durchgeführt werden, indem ein Pfropfprozess unter Verwendung einer Mischung aus jeweils einem oder mehreren Monomeren der Formeln (I) und (IV) durchgeführt wird.

Eine weitere vorteilhafte Ausführungsform des vorliegenden Verfahrens zur Herstellung von Pfropfcopolymeren zeichnet sich dadurch aus, dass der Pfropfprozess bis zu 5 mal nacheinander durchgeführt wird. Hierbei werden sukzessive mehrere Pfropfungen mit jeweils einer geringen Monomermenge, z.B. jeweils 1 Gew.-% eines Monomeren, welches als H-Brücken-Donator wirken kann, durchgeführt. Werden beispielsweise insgesamt 2 Gew.-% eines solchen Monomeren zur Pfropfung verwendet, so werden vorzugsweise zwei hintereinander folgende Pfropfschritte mit beispielsweise jeweils 1 Gew.-% des betreffenden Monomeren durchgeführt. Für den Fachmann ist es klar, dass hier abhängig vom Einzelfall auch eine Reihe anderer Werte für die eingesetzten Monomermengen und für die Anzahl der Pfropfschritte verwendet werden können, so dass diese hier nicht einzeln aufgezählt werden müssen. Es versteht sich von selbst, dass die mehrfache, bis zu 5-malige Wiederholung des Pfropfschrittes auch mit Mischungen der Monomere der Formeln (I) und (IV) erfolgen kann.

Das Monomer in Formel (IV) kann ein N-funktionalisiertes Monomer, bevorzugt ein N-vinyl-substituiertes Monomer sein, wie beispielsweise N-Vinyl-Pyrrolidon, N-Vinyl-Caprolactam, N-Vinyl-Triazol, N-Vinyl-Benztriazol oder N-VinylImidazol. In einer anderen Ausführung kann es sich auch um ein Vinylpyridin, wie bespielsweise 2-Vinyl-Pyridin, handeln. Ebenso kann es sich um ein Methacrylat oder Acrylat handeln, welches in seiner Esterfunktion einen N-Heterozyklus enthält. Daneben kann das N enthaltende Monomer ein N,N-Dialkylaminoacrylat bzw. dessen Methacrylatanaloga sein, wobei die Aminoalkylgruppen 1-8 C-Atome enthalten. Bezüglich der weiteren möglichen Verbindungen sei an dieser Stelle auf die ausführliche Aufzählung bei der Definition der Monomere der Formel (IV) verwiesen

Unter Verwendung der erfindungsgemäßen Pfropfcopolymere läßt sich ein Konzentrat als Schmieröladditiv herstellen. Das Konzentrat enthält 15 bis 85 Gew.-% eines oder mehrerer der Pfropfcopolymeren. Zusätzlich können noch organische Lösungsmittel, insbesondere ein Mineralöl und/oder ein synthetisches Öl im Konzentrat enthalten sein.

Besonders geeignet sind die erfindungsgemäßen Pfropfcopolymere zur Herstellung von Schmierölzusammensetzungen. Hierbei werden die Pfropfcopolymeren in der Regel in einer Menge im Bereich von 0,2 bis 30 Gew-% eingesetzt. Die Schmierölzusammensetzungen können weiterhin 5 bis 90 Gew.% mineralisches und/oder synthetisches Grundöl und zusammengenommen 0,2 bis 20 Gew.-% von weiteren üblichen Additiven wie z. B. Stockpunktemiedriger, VI-Verbesserer, Alterungsschutzmittel, Detergentien, Dispergierhilfsmittel oder verschleißmindernde Komponenten enthalten.

In der Praxis werden säurefunktionalisierte Polymere oftmals mit Aminen, Polyaminen oder Alkoholen in polymeranalogen Reaktionen neutralisiert, Vorschriften hierzu offenbaren beispielsweise die DE-A 2519197 (ExxonMobil) sowie die US 3,994,958 (Rohm & Haas Company). Ebenso wie in diesen beiden Anmeldungen können die erfindungsgemäßen Polymere der vorliegenden Anmeldung in einer polymeranalogen Reaktion mit primären oder sekundären Aminverbindungen oder Alkoholen in polymeranalogen Reaktionen nachträglich neutralisiert oder verestert werden. Hierbei kann eine teilweise oder vollständige Neutralisierung der Polymere durchgeführt werden. Eine vollständige Neutralisierung schließt sowohl eine Veresterung der im Backbone befindlichen Säurefunktionen als auch eine Veresterung der im Pfropfanteil vorhandenen Säurefunktionen ein.

Neben VI, Dispergiervermögen und hierin nicht diskutierten Eigenschaften wie z.B. Oxidationsbeständigkeit interessiert insbesondere auch der Einfluss eines Schmieröles auf das Verschleißverhalten eines Maschinenelementes. So werden Schmierölen in der Regel speziell hierfür vorgesehene verschleißreduzierende Additive zugesetzt. Solche Additive sind zumeist phosphor- und/oder schwefelhaltig. In der Schmierstoffindustrie existiert ein Bestreben, den Phosphor- und Schwefeleintrag in moderne Schmierölformulierungen zu reduzieren. Dies hat sowohl technische (Vermeidung von Abgaskatalysatorvergiftung) als auch umweltpolitische Gründe. Die Suche nach phosphor- und schwefelfreien Schmierstoffadditiven generierte damit gerade in jüngster Vergangenheit zu einer intensiven Forschungstätigkeit vieler Additivhersteller.

Vorteile im Verschleißverhalten können sich positiv auf den Energieverbrauch, z.B. eines Diesel- oder Ottomotors, auswirken. Die Polymere der vorliegenden Erfindung wurden bisher noch nicht mit einem positiven Effekt auf Verschleißverhalten in Verbindung gebracht.

Die Polymere der vorliegenden Erfindung sind den in Bezug auf Verschleißschutz bekannten, handelsüblichen Polymeren mit N-Funktionalitäten überlegen.

Nach heutigem Stand der Technik werden Kurbeltrieb, Kolbengruppe, Zylinderlaufbahn und die Ventilsteuerung eines Verbrennungsmotors mit einem Motorenöl geschmiert. Hierbei wird das Motorenöl, welches sich in der Ölwanne des Motors sammelt, mittels Förderpumpe über einen Ölfilter an die einzelnen Schmierstellen gefördert (Druckumlaufschmierung in Verbindung mit Spritz- und Ölnebelschmierung).

Das Motorenöl hat in diesem System die Funktionen: Übertragung von Kräften, Reduzierung der Reibung, Verminderung von Verschleiß, Kühlung der Bauteile sowie Gasabdichtung des Kolbens.

Das Öl wird hierbei unter Druck den Lagerstellen zugeführt (Kurbelwellen-, Pleuel,- und Nockenwellenlager). Die Gleitstellen des Ventiltriebs, der Kolbengruppe, Zahnräder und Ketten werden mit Spritzöl, Schleuderöl oder Ölnebel versorgt.

An den einzelnen Schmierstellen variieren im Betrieb zu übertragende Kräfte, Kontaktgeometrie, Gleitgeschwindigkeit und Temperatur in weiten Bereichen.

Die Erhöhung der Leistungsdichte der Motoren (kW / Hubraum; Drehmoment / Hubraum) führt zu höheren Bauteiltemperaturen und Flächenpressungen der Gleitstellen.

Zur Gewährleistung der Motorölfunktionen unter diesen Betriebsbedingungen wird die Leistungsfähigkeit eines Motorenöls in genormten Prüfverfahren und Motortests (z.B. API Klassifikation in USA oder ACEA Testsequences in Europa) geprüft. Zusätzlich kommen von einzelnen Herstellern selbst definierte Prüfverfahren zum Einsatz, bevor ein Motorenöl für die Verwendung zugelassen wird.

Von den oben genannten Schmieröleigenschaften kommt dem Verschleißschutz des Motorenöls eine besondere Bedeutung zu. Die Anforderungsliste der ACEA Test Sequences 2002 als Beispiel zeigt, dass in jeder Kategorie (A für PKW Ottomotoren, B für PKW Dieselmotoren und E für LKW Motoren) mit einem getrennten Motortest der Nachweis eines ausreichenden Verschleißschutzes für den Ventiltrieb zu führen ist.

Das Öl wird im Betrieb folgenden Belastungen ausgesetzt:
● Kontakt mit heißen Bauteilen (bis über 300°C)
● Anwesenheit von Luft (Oxidation), Stickoxiden (Nitration), Kraftstoff und dessen Verbrennungsrückstände (Wandkondensation, Eintrag in flüssiger Form) und Rußpartikel aus der Verbrennung (Eintrag von festen Fremdstoffen).
● Zum Zeitpunkt der Verbrennung ist der Ölfilm auf Zylinder hoher Strahlungswärme ausgesetzt.
● Die Turbulenz, erzeugt vom Kurbeltrieb des Motors schafft eine große aktive Oberfläche des Öls in Form von Tropfen im Gasraum des Kurbeltriebs und Gasblasen in der Ölwanne.

Die aufgeführten Belastungen Verdampfung, Oxidation, Nitration, Verdünnung mit Kraftstoff und Eintrag von Partikeln verändern in Folge des Motorbetriebs das Motorenöl selbst und Bauteile des Motors, welche im Betrieb mit Motorenöl benetzt werden. Als Folge ergeben sich für den einwandfreien Betrieb des Motors folgende unerwünschte Effekte:
● *Veränderung der Viskosität* (im Tieftemperaturbereich sowie bei 40° und 100°C bestimmt)
● *Pumpfähigkeit des Öls bei niedrigen Außentemperaturen*
● *Ablagerungsbildung an heißen und kalten Bauteilen des* Motors: Hierunter wird die Bildung lackartiger Schichten (Farbe braun bis schwarz) bis hin zum Aufbau von Kohle verstanden. Diese Ablagerungen beeinträchtigen die Funktion einzelner Bauteile wie: Freigängigkeit der Kolbenringe und Verengung luftführender Bauteile des Turboladers (Diffusor und Spirale). In Folge kann es zu schweren Motorschäden bzw. Leistungseinbruch und Zunahme der Abgasemissionen kommen. Des weiteren bildet sich, bevorzugt auf den waagrechten Flächen des Ölraumes eine schlammartige Ablagerungsschicht, die im Extremfall auch Ölfilter und Ölkanäle des Motors verstopfen kann, was ebenfalls einen Motorschaden nach sich ziehen kann.

Die Verringerung der Ablagerungsbildung und die Gewährleistung hoher Detergier- und Dispergierfähigkeit sowie Verschleißschutzwirkung über eine lange Nutzungsdauer sind von zentraler Bedeutung in gängigen Freigabeverfahren wie am folg. Beispiel der ACEA-Test-Sequenzen aus dem Jahre 1998 zu ersehen ist:
● Kategorie A (Ottomotoren): In 6 motorischen Prüfverfahren wird 10 mal Ölablagerung, 4 mal Verschleiß und 2 mal Viskosität bestimmt. Bei der Bestimmung des Ablagerungsverhaltens wird 3 mal Kolbensauberkeit, 3 mal Kolbenringstecken und 3 mal die Schlammbildung beurteilt.
● Kategorie B (leichte Dieselmotoren): In 5 motorischen Prüfverfahren wird 7 mal Ölablagerung, 3 mal Verschleiß und 2 mal Viskosität bestimmt. Bei der Bestimmung des Ablagerungsverhaltens wird 4 mal Kolbensauberkeit, 2 mal Kolbenringstecken und einmal die Schlammbildung beurteilt.
● Kategorie E (schwere Dieselmotoren = Heavy Duty Diesel): In 5 motorischen Prüfverfahren wird 7 mal Ölablagerung, 6 mal Verschleiß und einmal Viskosität bestimmt. Bei der Bestimmung des Ablagerungsverhaltens wird 3 mal Kolbensauberkeit, 2 mal Schlammbildung und einmal Turboablagerung beurteilt.

Für die vorliegende Erfindung wurde der Einfluss des eingesetzten Schmierstoffes auf Verschleiß nach Testverfahren CEC-L-51-A-98 gemessen. Dieses Testverfahren ist sowohl für die Untersuchung des Verschleißverhaltens in einem PKW-Diesel-Motor (ACEA Kategorie B) als auch in einem LKW-Diesel-Motor (ACEA Kategorie E) geeignet. Bei diesen Prüfverfahren wird von jedem Nocken das Umfangsprofil in 1° Schritten auf einer 2- bzw. 3-D Messmaschine vor und nach Test ermittelt und verglichen. Die im Test entstandene Profilabweichung entspricht dabei dem Nockenverschleiß. Zur Beurteilung des geprüften Motorenöls werden die Verschleißergebnisse der einzelnen Nocken gemittelt und mit dem Grenzwert der entsprechenden ACEA Kategorien verglichen.

Abweichend von der CEC Prüfvorschrift wurde die Testdauer von 200 h auf 100 h verkürzt. Die durchgeführten Untersuchungen zeigten, dass bereits nach 100 h eindeutige Differenzierungen zwischen den eingesetzten Ölen vorgenommen werden konnten, da schon nach dieser Zeit deutliche Unterschiede im Verschleiß festgestellt wurden.

Öl A (s. Tabellen 1 und 2) der vorliegenden Erfindung diente als erstes Vergleichsbeispiel für die Verschleißversuche. Es handelte sich um eine Heavyduty-Diesel Motorenölformulierung der Kategorie SAE 5W-30. Dieses Öl wurde wie in der Praxis üblich aus einem handelsüblichen Grundöl, im vorliegenden Fall Nexbase 3043 der Firma Fortum, sowie weiteren typischen Additiven aufgemischt. Bei diesen Additiven handelte es sich zum einen um Oloa 4549 der Firma Oronite. Letzere Komponente ist ein typisches DI-Additiv für Motorenöle. Das Produkt enthält neben aschefreien Dispergiermitteln auch Komponenten zur Verbesserung des Verschleißverhaltens. Letztere Komponenten in Oloa 4549 sind zink- und phosphorhaltige Verbindungen. Zink- und phosphorhaltige Verbindungen kann man als die momentan gebräuchlichsten Zusätze zur Verbesserung des Verschleißverhaltens ansehen. Als weiteres Additiv wurde zwecks Verdickerer bzw. VI-Verbesserer-Wirkung ein Ethylen-Propylen-Copolymer (Paratone 8002 der Firma Oronite) eingesetzt. Paratone 8002 wurde, wie in der Praxis üblich, als Lösung in einem Mineralöl eingesetzt. Obwohl in ihrer VI-Wirkung eingeschränkt, so sind Ethylen-Propylen-Copolymere aufgrund ihrer guten Verdickungswirkung die zur Zeit gängigsten VI-Verbesserer in PKW- und LKW-Motorenölen. Eine auffällige verschleißverbessernde Wirkung wurde für solche Systeme bisher noch nicht beschrieben. Ein Polyacrylat wurde als Zusatzkomponente für Öl A nicht eingesetzt. Zusammenfassend wurde Öl A aus 75,3 Gew.-% Nexbase 3043, 13,2 Gew.-% Oloa 4594 sowie 11,5 Gew.-% einer Lösung aus Paratone 8002 zusammengestellt.

**Tabelle 1. Verschleißergebnisse nach CEC-L-51-A-98 erhalten mit den Ölen A-C**

| ***Öl*** | ***Gehalt an Paratone 8002*** | ***Polyacrylat*** | **CEC-L-51-A-98, *mittlerer Nockenverschleiß*** | |
|---|---|---|---|---|
| | | je 3 Gew.-% | nach 100 h | [µm] |
| A | 11,5 Gew.% | - | | 47,4 |
| B | 8,5 Gew.-% | Beispiel 1 | | 23,9 |
| C | 8,5 Gew.-% | Beispiel 3 | | 3,9 |

**Tabelle 2. Rheologische Daten sowie TBN-Werte der für die Verschleißtests eingesetzten Formulierungen**

| ***Öl*** | ***Gehalt* an *Paratone 8002*** [Gew.%] | ***Polyacrylat*** je 3 Gew.-% | KV40°C | KV100°C | VI | TBN | CCS | HTHS |
|---|---|---|---|---|---|---|---|---|
| A | 11,5 | - | | 11,38 | | | | |
| B | 8,5 | Beispiel 1 | 67,07 | 11,91 | 176 | 9,1 | 4621 | 3,41 |
| C | 8,5 | Beispiel 3 | 62,88 | 11,46 | 180 | 9,3 | 4406 | 3,35 |

Wie aus Tabelle 2 ersichtlich unterschieden sich alle für die Verschleißversuche eingesetzten Formulierungen bezüglich ihrer kinematischen Viskositätsdaten im wesentlichen nicht. Dies ist anhand der kinematischen Viskositäten gemessen bei 40 und 100°C (in Tabelle 2 als KV40°C bzw. KV100°C bezeichnet) zu erkennen. Ebenso zeigt Tabelle 2, dass die eingesetzten Formulierungen sich bezügl. Viskositätsindex (VI), Total Base Number (TBN), Kaltstartverhalten ausgedrückt durch Crankcase-Simulator-Daten (CCS) sowie temporärer Scherverluste bei hohen Temperaturen ausgedrückt durch High-Temperature-High-Shear-Daten (HTHS) nicht maßgeblich unterschieden. Die KV40°C-, KV100°C-, VI-, TBN-, CCS- und HTHS-Daten wurden nach den dem Fachmann bekannten ASTM-Methoden bestimmt.

Bezüglich Korrosionsverhalten sowie Oxidationsbeständigkeit waren keine auffälligen Unterschiede der erfindungsgemäßen Formulierungen gegenüber den Vergleichsbeispielen zu erkennen. Exemplarisch wurden die erfindungsgemäßen Formulierungen B und C im direkten Vergleich mit dem Öl A bezüglich ihres Korrosionsverhaltens untersucht (s. Tabelle 3). Diese Untersuchungen wurden gemäß ASTM D 5968 für Blei, Kupfer und Zinn und gemäß ASTM D 130 für Kupfer durchgeführt.

**Tabelle 3. Korrosionsverhalten von für Verschleißtests eingesetzte Formulierungen**

| ***Öl*** | ***Polyacrylat*** | | ***Korrosion ASTM D 5968*** | | ***ASTM D 130*** |
|---|---|---|---|---|---|
| | | Pb | Cu | Sn | Cu |
| A | - | 109,5 | 4 | 0 | 1b |
| B | Beispiel 1 | 130,0 | 4 | 0 | 1b |
| C | Beispiel 3 | 77,0 | 4,5 | 0 | 1b |

Das Oxidationsverhalten wurde anhand der dem Fachmann bekannten PDSC-Methode bestimmt (CEC L-85-T-99).

Den Ölen B und C war gemeinsam, dass je 3 Gew.-% der Paratone 8002-Lösung durch 3 Gew.-% der jeweiligen Polyacrylatlösung ersetzt wurden. Die Öle B und C stellen die erfindungsgemäßen Formulierungen bezüglich Verschleißverhalten dar. Es ist zu erkennen, dass insbesondere eine Formulierung, welche ein Polymer aus Beispiel 3 enthält, als besonders vorteilhaft in Bezug auf Verschleißschutz anzusehen ist (s. Tab. 1). Der mittlere Nockenverschleiß fiel hier mit 3,9 µm gegenüber den vergleichenden Formulierungen als besonders gering auf. Das einfach herzustellende Polymer aus Beispiel 1 wurde als verbessert gegenüber dem Stand der Technik gefunden, angezeigt durch einen Vergleich im Nockenverschleiß gegenüber mit Öl A bestimmten Werten.

Als Grundöl zur Herstellung einer erfindungsgemäßen Schmierölformulierung ist im Prinzip jede Verbindung geeignet, die für eine hinreichenden Schmierfilm sorgt, der auch bei erhöhten Temperaturen nicht reißt. Zur Bestimmung dieser Eigenschaft können beispielsweise die Viskositäten dienen, wie sie beispielsweise in den SAE-Spezifikationen festgelegt sind.

Besonders geeignet sind unter anderem Verbindungen, die eine Viskosität aufweisen, die im Bereich von 15 Saybolt-Sekunden (SUS, Saybolt Universal Seconds) bis 250 SUS, bevorzugt im Bereich von 15 bis 100 SUS, jeweils bei 100°C bestimmt, liegt.

Zu den hierfür geeigneten Verbindungen gehören unter anderem natürliche Öle, mineralische Öle und synthetische Öle sowie Mischungen hiervon.

Natürliche Öle sind tierische oder pflanzliche Öle, wie beispielsweise Klauenöle oder Jojobaöle. Mineralische Öle werden hauptsächlich durch Destillation aus Rohöl gewonnen. Sie sind insbesondere hinsichtlich ihres günstigen Preises vorteilhaft. Synthetische Öle sind unter anderem organische Ester, synthetische Kohlenwasserstoffe, insbesondere Polyolefine, die den oben genannten Anforderungen genügen. Sie sind meist etwas teurer als die mineralischen Öle, haben aber Vorteile hinsichtlich ihrer Leistungsfähigkeit.

Diese Grundöle können auch als Mischungen eingesetzt werden und sind vielfach kommerziell erhältlich.

Neben dem Grundöl und den hierin erwähnten Polymeren, welche bereits Beiträge zum Dispergierverhalten und zum Verschleißschutz bieten, enthalten Schmieröle i.d.R. weitere Additive. Dies ist insbesondere bei Motorenölen, Getriebeölen sowie Hydraulikölen der Fall. Die Additive suspendieren Feststoffe (Detergent-Dispersant-Verhalten), neutralisieren saure Reaktionsprodukte u.
bilden einen Schutzfilm auf der Zylinderoberfläche (EP-Zusatz, für "extreme pressure"). Daneben werden reibungsvermindernde Zusätze wie Friction Modifier, Alterungsschutzmittel, Stockpunkterniedriger, Korrosionsschutzmittel, Farbstoffe, Demulgatoren und Geruchsstoffe eingesetzt. Weitere wertvolle Hinweise findet der Fachmann in Ullmann's Encyclopedia of Industrial Chemistry, Fifth Edition auf CD-ROM, Ausgabe 1998. Die erfindungsgemäßen Polymere der vorliegenden Erfindung können aufgrund ihres Beitrages zum Verschleißschutz auch in Abwesenheit eines Friction Modifiers oder eines EP-Zusatz für einen ausreichenden Verschleißschutz sorgen. Die verschleißverbessernde Wirkung wird dann durch das erfindungsgemäße Polymer beigesteuert, welchem man deshalb Friction Modifier-Wirkung zuschreiben könnte.

Die Mengen, in denen oben erwähnte Additive eingesetzt werden, sind von dem Anwendungsgebiet des Schmiermittels abhängig. Im allgemeinen beträgt der Anteil des Grundöls zwischen 25 bis 90 Gew.-%, bevorzugt 50 bis 75 Gew.-%. Die Additive können auch als sog. DI-Pakete (Detergent-Inhibitor) eingesetzt werden, die weithin bekannt sind und kommerziell erhalten werden können.

Besonders bevorzugte Motorenöle enthalten neben dem Grundöl beispielsweise 0,1-1 Gew.-% Stockpunkterniedriger, 0,5-15 Gew.-% VI-Verbesserer,
0,4-2 Gew.-% Alterungsschutzmittel,
2-10 Gew.-% Detergentien,
1-10 Gew.-% Schmierfähigkeitsverbesserer,
0,0002-0,07 Gew.-% Schaumverhütungsmittel,
0,1-1 Gew.-% Korrosionsschutzmittel
1 bis 10 Gew.-% Dispergierkomponenten.

Das erfindungsgemäße Schmieröl kann neben dem oben beschriebenen Grundöl zusätzlich, vorzugsweise in einer Konzentration von 0,05 -10,0 Gewichtsprozent, ein Alkylalkoxylat der Formel (V) enthalten. Das Alkylalkoxylat kann der Schmierölzusammensetzung direkt, als Bestandteil des VI-Verbesserers, als Bestandteil des DI-Paketes, als Bestandteil eines Schmiermittelkonzentrates oder nachträglich dem Öl zugesetzt wird. Als Öl können hierbei auch aufgearbeitet Gebrauchtöle eingesetzt werden. 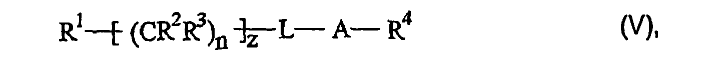 worin
R¹, R² und R³ unabhängig Wasserstoff oder ein Kohlenwassertstoffrest mit bis zu 40 Kohlenstoffatomen sind,
R⁴ Wasserstoff, ein Methyl- oder Ethylrest ist,
L eine verknüpfende Gruppe,
n eine ganze Zahl im Bereich von 4 bis 40,
A eine Alkoxygruppe mit 2 bis 25 wiederkehrende Einheiten, welche von Ethylenoxid, Propylenoxid und/oder Butylenoxid abgeleitet werden, wobei A Homopolymere sowie statistische Copolymere aus wenigstens zwei der vorgenannten Verbindungen umfaßt, und
z 1 oder 2 ist,
wobei der unpolare Teil der Verbindung (V) der Formel (VI) 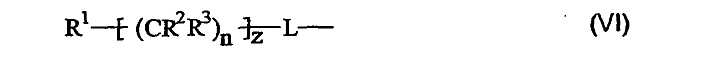 mindestens 9 Kohlenstoffatome enthält, enthalten. Diese Verbindungen werden im Rahmen der Erfindung als Alkylalkoxylate bezeichnet. Diese Verbindungen können sowohl einzeln sowie als Mischung verwendet werden.

Unter Kohlenwasserstoffresten mit bis zu 40 Kohlenstoffatomen sollen beispielsweise gesättigte und ungesättigte Alkylreste, die linear, verzweigt oder cyclisch sein können, sowie Arylreste, die auch Heteroatome und Alkylsubstituenten enthalten können, verstanden werden, die gegebenenfalls mit Substituenten, wie beispielsweise Halogenen, versehen sein können.

Von diesen Resten sind (C₁-C₂₀)-Alkyl, insbesondere (C₁-C₈)-Alkyl und ganz besonders (C₁-C₄)-Alkyl-Reste bevorzugt.

Unter dem Ausdruck "(C₁-C₄)-Alkyl" sind ein unverzweigter oder verzweigter Kohlenwasserstoffrest mit 1 bis 4 Kohlenstoffatomen, wie z.B. der Methyl-, Ethyl-, Propyl-, Isopropyl-, 1-Butyl-, 2-Butyl-, 2-Methylpropyl- oder tert.-Butylrest zu verstehen;
unter dem Ausdruck "(C₁-C₈)-Alkyl" die vorgenannten Alkylreste, sowie z.B. der Pentyl-, 2-Methylbutyl-, Hexyl-, Heptyl-, Octyl-, oder der 1,1,3,3-Tetramethylbutyl-Rest;
unter dem Ausdruck "(C₁-C₂₀)-Alkyl" die vorgenannten Alkylreste, sowie z.B. der Nonyl-, 1-Decyl-, 2-Decyl-, Undecyl-, Dodecyl-, Pentadecyl-oder Eicosyl-Rest.

Des weiteren sind (C₃-C₈)-Cycloalkylreste als Kohlenwasserstoffrest bevorzugt. Hierzu gehören unter anderem die Cyclopropyl-, Cyclobutyl-, Cyclopentyl-, Cyclohexyl-, Cycloheptyl- oder Cyclooctyl-Gruppe.

Des weiteren kann der Rest auch ungesättigt sein. Von diesen Resten sind "(C₂-C₂₀)-Alkenyl", "(C₂-C₂₀)-Alkinyl" und insbesondere "(C₂-C₄)-Alkenyl" sowie "(C₂-C₄)-Alkinyl" bevorzugt. Unter dem Ausdruck "(C₂-C₄)-Alkenyl" ist z.B. die Vinyl-, Allyl-, 2-Methyl-2-propenyl-oder 2-Butenyl-Gruppe zu verstehen;
unter dem Ausdruck "(C₂-C₂₀)-Alkenyl" die vorstehend genannten Reste sowie z.B. die 2-Pentenyl-, 2-Decenyl- oder die 2-Eicosenyl-Gruppe;
unter dem Ausdruck -(C₂-C₄)-Alkinyl z.B. die Ethinyl-, Propargyl-, 2-Methyl-2-propinyl oder 2-Butinyl-Gruppe;
unter dem Ausdruck "(C₂-C₂₀)-Alkenyl" die vorstehend genannten Reste sowie z.B. die 2-Pentinyl-oder die 2-Decinyl-Gruppe zu verstehen.

Des weiteren sind aromatische Reste, wie "Aryl" oder "heteroaromatische Ringsysteme" bevorzugt. Unter dem Ausdruck "Aryl" ist ein isocyclischer aromatischer Rest mit vorzugsweise 6 bis 14, insbesondere 6 bis 12 C-Atomen, wie beispielsweise Phenyl, Naphthyl oder Biphenylyl, vorzugsweise Phenyl zu verstehen;
unter dem Ausdruck "heteroaromatisches Ringsystem" sind ein Arylrest, worin mindestens eine CH-Gruppe durch N ersetzt ist und/oder mindestens zwei benachbarte CH-Gruppen durch S, NH oder O ersetzt sind, zu verstehen, z.B. ein Rest von Thiophen, Furan, Pyrrol, Thiazol, Oxazol, Imidazol, Isothiazol, Isoxazol, Pyrazol, 1,3,4-Oxadiazol, 1,3,4-Thiadiazol, 1,3,4-Triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Pyrazin, Pyrimidin, Pyridazin, 1,3,5-Triazin, 1,2,4-Triazin, 1,2,4,5-Triazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder 4H-Chinolizin.

Die in dem hydrophoben Teil des Moleküls gegebenenfalls mehrfach auftretenden Reste R² bzw. R³ können jeweils gleich oder verschieden sein.

Die verknüpfende Gruppe L dient zur Verbindung des polaren Alkoxidteils mit dem unpolaren Alkylrest. Zu geeigneten Gruppen gehören beispielsweise aromatische Reste, wie Phenoxyl (L = -C₆H₄-O-), von Säuren abgeleitete Reste, wie beispielsweise Estergruppen (L = -CO-O-), Carbamatgruppen (L = -NH-CO-O-) und Amidgruppen (L = -CO-NH-), Ethergruppen (L = -O-) und Ketogruppen (L = -CO-). Hierbei sind besonders stabile Gruppen, wie beispielsweise die Ether-, Keto- und Aromat-Gruppen bevorzugt.

Wie zuvor erwähnt, ist n eine ganze Zahl im Bereich von 4 bis 40, insbesondere im Bereich von 10 bis 30. Falls n größer als 40 ist, so wird im allgemeinen die Viskosität, die durch das erfindungsgemäße Additiv erzeugt wird zu groß. Falls n kleiner als 4 ist, so reicht im allgemeinen die Lipophilität des Molekülteils nicht aus, um die Verbindung der Formel (V) in Lösung zu halten. Dementsprechend enthält der unpolare Teil der Verbindung (V) der Formel (VI) vorzugsweise insgesamt 10 bis 100 Kohlenstoffatome und ganz besonders bevorzugt insgesamt 10 bis 35 Kohlenstoffatome.

Der polare Teil des Alkylalkoxylats wird in Formel (V) durch A dargestellt. Es wird angenommen, daß dieser Teil des Alkylalkoxylats durch die Formel (VII) 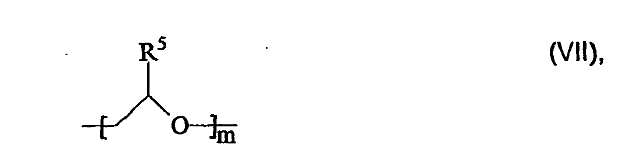 worin der Rest R⁵ Wasserstoff, ein Methylrest und/oder Ethylrest bedeutet und m eine ganze Zahl im Bereich von 2 bis 40, bevorzugt 2 bis 25, insbesondere 2 und 15 und ganz besonders bevorzugt 2 bis 5 ist, dargestellt werden kann. Die vorgenannten Zahlenwerte sind im Rahmen der vorliegenden Erfindung als Mittelwerte zu verstehen, da dieser Teil des Alkylalkoxylats im allgemeinen durch Polymerisation erhalten wird. Falls m größer als 40 ist, so wird die Löslichkeit der Verbindung in der hydrophoben Umgebung zu gering, so daß es zu einer Trübung im Öl, gegebenenfalls zur Präzipitation kommen kann. Ist die Zahl kleiner als 2, so kann der gewünschte Effekt nicht gewährleistet werden.

Der polare Teil kann Einheiten aufweisen, die von Ethylenoxid, von Propylenoxid und/oder von Butylenoxid abgeleitet sind, wobei Ethylenoxid bevorzugt ist. Hierbei kann der polare Teil nur eine dieser Einheiten aufweisen. Diese Einheiten können aber auch gemeinsam statistisch im polaren Rest auftreten.

Die Zahl z ergibt sich aus der Wahl der Verbindungsgruppe, bzw. aus den eingesetzten Ausgangsverbindungen. Sie beträgt 1 oder 2.

Bevorzugt ist die Anzahl der Kohlenstoffatome des unpolaren Teils des Alkylalkoxylats gemäß Formel (VI) größer als die Anzahl der Kohlenstoffatome des polaren Teils A, wahrscheinlich gemäß Formel (VII), dieses Moleküls. Vorzugsweise enthält der unpolare Teil mindestens doppelt soviel Kohlenstoffatome wie der polare Teil, besonders bevorzugt die dreifache Anzahl oder mehr.

Alkylalkoxylate sind kommerziell erhältlich. Hierzu gehören beispielsweise die ^{®}Marlipal- und ^{®}Marlophen- Sorten von Sasol und die ^{®}Lutensol-Typen von BASF.
Hierzu gehören beispielsweise ^{®}Marlophen NP 3
(Nonylphenolpolyethylenglykolether (3EO)), ^{®}Marlophen NP 4
(Nonylphenolpolyethylenglykolether (4EO)), ^{®}Marlophen NP 5
(Nonylphenolpolyethylenglykolether (5EO)), ^{®}Marlophen NP 6
(Nonylphenolpolyethylenglykolether (6EO));

^{®}Marlipal 1012/6 (C₁₀-C₁₂-Fettalkoholpolyethylenglykolether (6EO)), ^{®}Marlipal MG (C₁₂-Fettalkoholpolyethylenglykolether), ^{®}Marlipal 013/30 (C₁₃-Oxoalkoholpolyethylenglykolether (3EO)), ^{®}Marlipal 013/40 (C₁₃-Oxoalkoholpolyethylenglykolether (4EO));

^{®}Lutensol TO 3 (i-C₁₃-Fettalkohol mit 3 EO-Einheiten), ^{®}Lutensol TO 5 (i-C₁₃-Fettalkohol mit 5 EO-Einheiten), ^{®}Lutensol TO 7 (i-C₁₃-Fettalkohol mit 7 EO-Einheiten), ^{®}Lutensol TO 8 (i-C₁₃-Fettalkohol mit 8 EO-Einheiten) und ^{®}Lutensol TO 12 (i-C₁₃-Fettalkohol mit 12 EO-Einheiten).

### Beispiele

Vergleichsbeispiele 1-3 der vorliegenden Erfindung, welche exemplarisch für solche gescheiterten Syntheseversuche stehen sollen, führen zu Reaktionsprodukten, die dadurch gekennzeichnet sind, dass ein Teil der entstandenen Polymere bereits in fester Form aus der Polymerlösung ausfällt.

Die Herstellung gemäß Beispiel 1) stellt eine homogene, klar aussehende Polymerlösung bereit. Wird der Pfropfprozess analog, also mit 2 Gew.% Methacrylsäure unter gleichen Prozessbedingungen durchgeführt aber ohne vorher eine geringe Menge Methacrylsäure zum Aufbau des Polymerrückgrates verwendet zu haben, so erhält man eine trüb aussehende, inhomogene Polymerlösung (s. Vergleichsbeispiel 3). Selbst im Falle einer Pfropfung mit lediglich 1 Gew.-% Methacrylsäure erhält man ein inhomogenes Reaktionsprodukt (s. Vergleichsbeispiel 1). Es überrascht daher nicht, dass eine Pfropfung mit 3 Gew.-% Methacrylsäure ohne vorher einen bestimmten Anteil dieser Spezies in das Polymerrückgrat eingebaut zu haben, ebenso zu einem stark trüben Produkt führt, welches dadurch gekennzeichnet ist, dass feste Bestandteile bereits aus der Lösung ausfallen (s. Vergleichsbeispiel 2). Dies ist auch dann der Fall, wenn man versucht die 3 Gew.-% Methacrylsäure nicht auf einmal, sondern sukzessive, beispielsweise in Portionen zu je 1 Gew.-% in einem Pfropfprozess umzusetzen. Interessanterweise lässt sich ein Copolymer mit 3 Gew.-% Methacrylsäure, welche statistisch ins Polymer und nicht über eine Pfropfung einpolymerisiert werden, bequem herstellen.

Ebenso wie Carbonsäuren sind Säureamide bekannt für ihre gleichzeitige mögliche Wirkung als sowohl H-Brücken-Donator als auch H-Brücken-Akzeptor. In Analogie zu Beispiel 1, in welchem Methacrylsäure als Monomersorte mit H-Brücken-Donator-Funktion gewählt wurde, beschreibt Beispiel 4 der vorliegenden Erfindung ein Polymer, in welchem Dimethylaminopropylmethacrylamid (DMAPMAM) sowohl im Polymerrückgrat als auch im gepfropften Anteil vorliegt. Das in Beispiel 4 dargelegte Verfahren führt zu einer homogenen, klar aussehenden Polymerlösung und belegt, dass das hierin vorgestellte Syntheseprinzip von universellem Charakter ist, also nicht nur auf Carbonsäurederivate, sondern beispielsweise auch auf Säureamide anwendbar ist.

Die zur Pfropfung verwendeten Monomere mit H-Brücken-Donator-Funktionalitäten sowie die bereits zum Aufbau der Hauptpolymerkette verwendeten Monomere mit H-Brücken-Donator-Funktionalitäten müssen sich nicht unbedingt entsprechen. So beinhaltet die vorliegende Erfindung Polymere, in welchen Mischungen von verschiedenen Monomeren mit H-Brücken-Donator-Funktionalitäten zum Aufbau der Polymerhauptkette und/oder zum Pfropfschritt eingesetzt werden. Beispiel 2 beschreibt eine Polymersynthese, in welcher 1 Gew.-% Methacrylsäure in die Polymerhauptkette eingebaut wird sowie weitere 2 Gew.-% der gleichen Spezies, gefolgt von 3 Gew.-% DMAPMAM im gepfropften Anteil vorliegen.

Neben einer Pfropfung mit einem Monomer mit H-Brücken-Donator-Funktion können weitere Pfropfungen mit anderen Monomersorten durchgeführt werden. Hierzu werden vorzugsweise die eingangs erwähnten N oder O enthaltenden Monomertypen mit Dispergierwirkung eingesetzt. Letztere Monomere sind dadurch gekennzeichnet, dass es sich bei ihrer N oder O enthaltenden Funktionalität i.d.R. um eine H-Brücken-Akzeptor-Funktion handelt. Eine zusätzliche Pfropfung mit einem solchen Monomer kann entweder auf den Pfropfprozeß mit dem Monomer, welches H-Brücken-Donator-Funktion besitzt, folgen oder diesem vorangestellt werden. Ebenso sind Pfropfungen mit Monomermischungen, welche neben Monomeren mit H-Brücken-Donator-Funktionalitäten zusätzlich die oben erwähnten Monomere enthalten, nach erfindungsgemäßem Polymerisationsverfahren durchführbar. Beispiel 3 der vorliegenden Erfindung umfasst eine Polymersynthese, in welcher 1 Gew.% Methacrylsäure nach erfindungsgemässem Verfahren zum Aufbau der Hauptkette verwendet wurde, dann zweimal mit weiteren jeweils 1 Gew.% Methacrylsäure nach erfindungsgemäßem Verfahren gepfropft wurde und danach schließlich noch ein Pfropfschritt mit 3 Gew.% N-Vinylpyrrolidon angeschlossen wird. Auch in diesem Falle wird ein homogenes Reaktionsprodukt, gekennzeichnet durch eine klare Lösung, enthalten.

Es ist zu erkennen, dass insbesondere eine Formulierung, welche ein Polymer aus Beispiel 3 enthält, als besonders vorteilhaft in Bezug auf Verschleißschutz anzusehen ist. Der mittlere Nockenverschleiß fiel hier mit 3,9 µm gegenüber den vergleichenden Formulierungen als besonders gering auf. Die einfach herzustellenden Copolymere aus Beispiel 1 wurden als verbessert gegenüber dem Stand der Technik gefunden, angezeigt durch einen Vergleich im Nockenverschleiß gegenüber mit Öl A bestimmten Werten.

### Eingesetzte Produkte und Ausgangsmaterialien:

Bei den für die hierin beschriebenen Polymersynthesen verwendeten Ausgangsmaterialien wie Initiatoren oder Kettenüberträger handelte es sich durchweg um handelsübliche Produkte, wie sie beispielsweise von der Firma Aldrich oder der Akzo Nobel erhältlich sind. Ebenso waren Monomere, wie beispielsweise MMA (Degussa), NVP (BASF), DMAPMAM (Degussa), 10-Undezensäure (Atofina) oder Methacrylsäure (Degussa) handelsüblichen Quellen entnommen. Bei Plex 6844-0 handelte es sich um ein im Esterrest Harnstoff enthaltendes Methacrylat der Firma Degussa.

Für andere hierin verwendete Monomere, wie bespielsweise C8-C18-Alkylmethacrylate oder ethoxylierte Methacrylate, sei auf die Beschreibung der vorliegenden Anmeldung verwiesen. Dies gilt ebenso für die genauere Beschreibung der eingesetzten Lösemittel wie beispielsweise Öle oder Alkylalkoxylate.

### Begriffserklärungen, Messmethoden

Ist in der vorliegenden Erfindung von einem Acrylat oder beispielsweise einem Acrylatpolymer bzw. Polyacrylat die Rede, so sind hierunter neben Acrylaten, also Abkömmlingen der Acrylsäure, auch Methacrylate, also Abkömmlinge der Methacrylsäure, oder aber Mischungen aus Acrylat- bzw Methacrylat basierenden Systemen zu verstehen.

Wird in der vorliegenden Anmeldung ein Polymer als ein statistisch aufgebautes Polymer bezeichnet, so ist hiermit ein Copolymer gemeint, in welchem die verwendeten Monomersorten statistisch in der Polymerkette verteilt sind. Pfropf-Copolymere, Block-Copolymere oder Systeme mit einem Konzentrationsgradienten der verwendeten Monomersorten entlang der Polymerkette werden in diesem Zusammenhang als nicht-statistische Polymere oder nicht-statistisch aufgebaute Polymere bezeichnet.

Der Begriff "gepfropfter Anteil" bezieht sich auf den Anteil des Polymeren, welcher nachträglich, also nach abgeschlossener Polymerisation des Polymerbackbones kovalent an dieses fertiggestellte Polymerbackbone angeknüpft wird. Es sei darauf hingewiesen, dass hiermit keine Hinweise auf die Struktur der Endprodukte, ausgedrückt durch die Größe, Anzahl und die genauen kovalenten Verknüpfungspunkte der gepfropften Anteile, gegeben sind. Die Feststellung, dass alle hierin beschriebenen Polymere mit gepfropften Anteilen nicht-statistisch aufgebaut sind, trifft jedoch zu.

### Polymersynthesen

### Vergleichsbeispiel 1 (gescheiterte Pfropfung von 1 Gew.-% Methacrylsäure auf ein Polyacrylat)

In einem 2 Liter-Vierhalskolben ausgestattet mit Säbelrührer (betrieben mit 150 Umdrehungen pro Minute), Thermometer und Rückflusskühler werden 430 g eines 150N-Öles und 47,8 g einer Monomermischung bestehend aus C12-C18-Alkylmethacrylat und Methylmethacrylat im Gewichtsverhältnis 85,0 / 15,0 vorgelegt. Die Temperatur wird auf 100°C eingestellt. Nach Erreichen der 100°C werden 0,38 g tert-Butylperoctoat zugegeben und gleichzeitig ein Zulauf von 522,2 g einer Mischung bestehend aus C12-C18-Alkylmethacrylat und Methylmethacrylat im Gewichtsverhältnis 85,0/15,0 zusammen mit 2,09 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 4,3 g 150N-Öl, 5,7 g Methacrylsäure und 1,45 g tert-Butylperoctoat zugegeben. Eine Stunde nach dieser Zugabe werden danach nochmals dreimal im Abstand von je einer Stunde je 0,72 g tert-Butylperoctoat zugegeben. Die Gesamtreaktionszeit nach Zugabe der Methacrylsäure beträgt 8 Stunden. Man erhält ein trübes, inhomogen aussehendes Reaktionsprodukt, welches dadurch gekennzeichnet ist, dass polymere Anteile bereits in fester Form aus der flüssigen Phase ausgefallen sind.

### Vergleichsbeispiel 2

### (gescheiterte Pfropfung von 3 Gew.-% Methacrylsäure auf ein Polyacrylat)

In einem 2 Liter-Vierhalskolben ausgestattet mit Säbelrührer (betrieben mit 150 Umdrehungen pro Minute), Thermometer und Rückflusskühler werden 430 g eines 150N-Öles und 47,8 g einer Monomermischung bestehend aus C12-C18-Alkylmethacrylat und Methylmethacrylat im Gewichtsverhältnis 85,0/15,0 vorgelegt. Die Temperatur wird auf 100°C eingestellt. Nach Erreichen der 100°C werden 0,38 g tert-Butylperoctoat zugegeben und gleichzeitig ein Zulauf von 522,2 g einer Mischung bestehend aus C12-C18-Alkylmethacryiat und Methylmethacrylat im Gewichtsverhältnis 85,0/15,0 zusammen mit 2,09 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 13,17 g 150N-Öl, 17,45 g Methacrylsäure und 1,45 g tert-Butylperoctoat zugegeben. Eine Stunde nach dieser Zugabe werden danach nochmals dreimal im Abstand von je einer Stunde je 0,73 g tert-Butylperoctoat zugegeben. Die Gesamtreaktionszeit nach Zugabe der Methacrylsäure beträgt 8 Stunden. Man erhält ein sehr trübes, inhomogen aussehendes Reaktionsprodukt, welches dadurch gekennzeichnet ist, dass polymere Anteile bereits in fester Form aus der flüssigen Phase ausgefallen sind.

### Vergleichsbeispiel 3

### (gescheiterte Pfropfung von 2 Gew.-% Methacrylsäure auf ein Polyacrylat)

In einem 2 Liter-Vierhalskolben ausgestattet mit Säbelrührer (betrieben mit 150 Umdrehungen pro Minute), Thermometer und Rückflusskühler werden 430 g eines 150N-Öles und 47,8 g einer Monomermischung bestehend aus C12-C18-Alkylmethacrylat und Methylmethacrylat im Gewichtsverhältnis 85,0 / 15,0 vorgelegt. Die Temperatur wird auf 100°C eingestellt. Nach Erreichen der 100°C werden 0,38 g tert-Butylperoctoat zugegeben und gleichzeitig ein Zulauf von 522,2 g einer Mischung bestehend aus C12-C18-Alkylmethacrylat und Methylmethacrylat im Gewichtsverhältnis 85,0 / 15,0 zusammen mit 2,09 g tert-Butylperoctoat gestartet. Die Zulaufzeit beträgt 3,5 Stunden. Die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 8,68 g 150N-Öl, 11,52 g Methacrylsäure und 1,45 g tert-Butylperoctoat zugegeben. Eine Stunde nach dieser Zugabe werden danach nochmals dreimal im Abstand von je einer Stunde je 0,72 g tert-Butylperoctoat zugegeben. Die Gesamtreaktionszeit nach Zugabe der Methacrylsäure beträgt 8 Stunden. Man erhält ein trübes, inhomogen aussehendes Reaktionsprodukt, welches dadurch gekennzeichnet ist, dass polymere Anteile bereits in fester Form aus der flüssigen Phase ausgefallen sind.

### Beispiel 1

### (Polyacrylat mit 1 Gew.% Methacrylsäure im Polymerbackbone sowie 2 Gew.-% Methacrylsäure im gepfropften Anteil)

In einem 2 Liter-Vierhalskolben ausgestattet mit Säbelrührer (betrieben mit 150 Umdrehungen pro Minute), Thermometer und Rückflusskühler werden 430 g 150N-Öl und 47,8 g einer Monomermischung aus C12-C18-Alkylmethacrylat, Methylmethacrylat und Methacrylsäure im Gewichtsverhältnis 84,0/15,0/1,0 vorgelegt. Die Temperatur wird auf 100°C eingestellt. Nach Erreichen der 100°C werden 0,80 g tert-Butylperoctoat zugegeben und gleichzeitig ein Zulauf von 522,2 g einer Monomermischung aus C12-C18-Alkylmethmethacrylat, Methylmethacrylat, Methacrylsäure im Gewichtsverhältnis 84,0/15,0/1,0 zusammen mit 4,44 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 8,69 g 150N-Öl, 5,76 g Methacrylsäure und 0,72 g tert-Butylperoctoat zugegeben. 1 Stunde danach werden nochmals 5,76 g Methacrylsäure und 0,72 g tert-Butylperoctoat zugegeben. Die Gesamtreaktionszeit beträgt 8 Stunden. Man erhält ein homogen aussehendes Reaktionsprodukt.
Kinematische Viskosität bei 100°C: 3764 mm²/s
Verdickungswirkung bei 100°C (10% in einem 150N-Öl): 11,14 mm²/s
Verdickungswirkung bei 40°C (10% in einem 150N-Öl): 59,60 mm²/s
Restmonomergehalt C12-C18-Alkylmethacrylat: 0,51 %
Restmonomergehalt MMA: 0,036 %
Restmonomergehalt Methacrylsäure: 0,072 %

### Beispiel 2

### (Polyacrylat mit 1 Gew.% Methacrylsäure im Polymerbackbone sowie 2 Gew.-% Methacrylsäure und 3 Gew.-% DMAPMAM im gepfropften Anteil)

In einem 2 Liter-Vierhalskolben ausgestattet mit Säbelrührer (betrieben mit 150 Umdrehungen pro Minute), Thermometer und Rückflusskühler werden 430 g eines 150N-Öles und 47,8 g einer Monomermischung bestehend aus C12-C18-Alkylmethacrylat, Methylmethacrylat und Methacrylsäure im Gewichtsverhältnis 84,0/15,0/1,0 vorgelegt. Die Temperatur wird auf 100°C eingestellt. Nach Erreichen der 100°C werden 0,75 g tert-Butylperoctoat zugegeben und gleichzeitig ein Zulauf von 522,2 g einer Mischung bestehend aus C12-C18-Alkylmethacrylat, Methylmethacrylat und Methacrylsäure im Gewichtsverhältnis 84,0/15,0/1,0 zusammen mit 4,17 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 8,69 g 150N-Öl, 5,76 g Methacrylsäure und 0,72 g tert-Butylperoctoat zugegeben. 1 Stunde danach werden nochmals 5,76 g Methacrylsäure und 0,72 g tert-Butylperoctoat zugegeben. Nach einer weiteren Stunde werden 13,43 g 150N-Öl, 17,81 g Dimethylaminopropylmethacrylamid (DMAPMAM) und 1,48 g tert-Butylperoctoat zugegeben. 1 Stunde und 2 Stunden danach werden nochmals je 0,74 g tert-Butylperoctoat zugegeben. Die Gesamtreaktionszeit beträgt 8 Stunden. Man erhält ein homogen aussehendes Reaktionsprodukt.
Kinematische Viskosität der Polymerlösung bei 100°C: 3634 mm²/s
Verdickungswirkung bei 100°C (10 Gew.-% in einem 150N-Öl): 11,21 mm²/s
Verdickungswirkung bei 40°C (10 Gew.-% in einem 150N-Öl): 60,63 mm²/s
Restmonomergehalt C12-C18-Alkylmethacrylat: 0,444 %
Restmonomergehalt MMA: 0,035 %
Restmonomergehalt Methacrylsäure: 98 ppm

### Beispiel 3

### (Polyacrylat mit 1 Gew.% Methacrylsäure im Polymerbackbone sowie 2 Gew.-% Methacrylsäure und 3 Gew.-% NVP im gepfropften Anteil)

In einem 2 Liter-Vierhalskolben ausgestattet mit Säbelrührer (betrieben mit 150 Umdrehungen pro Minute), Thermometer und Rückflusskühler werden 430 g 150N-Öl und 47,8 g einer Monomermischung aus C12-C18-Alkylmethacrylat, Methylmethacrylat und Methacrylsäure im Gewichtsverhältnis 84,0/15,0/1,0 vorgelegt. Die Temperatur wird auf 100°C eingestellt. Nach Erreichen der 100°C werden 0,94 g tert-Butylperoctoat zugegeben und gleichzeitig ein Zulauf von 522,2 g einer Mischung aus C12-C18-Alkylmethacrylat, Methylmethacrylat und Methacrylsäure im Gewichtsverhältnis 84,0/15,0/1,0 zusammen mit 5,22 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden.

Danach werden bei 100°C 8,69 g 150N-Öl, 5,76 g Methacrylsäure und 0,72 g tert-Butylperoctoat zugegeben. 1 Stunde danach werden nochmals 5,76 g Methacrylsäure und 0,72 g tert-Butylperoctoat zugegeben. Nach einer weiteren Stunde wird der Ansatz auf 130 °C aufgeheizt. Nach Erreichen der 130°C werden 13,43 g 150N-Öl, 17,81 g n-Vinylpyrolidon (NVP) und 1,48 g tert-Butylperbenzoat zugegeben. 1 Stunde und 2 Stunden danach werden nochmals je 0,74 g tert-Butylperbenzoat zugegeben. Die Gesamtreaktionszeit der insgesamt 3 Pfropfschritte beträgt 8 Stunden. Man erhält ein klares, homogen aussehendes Reaktionsprodukt.
Spezifische Viskosität (20°C in Chloroform): 36,5ml/g
Kinematische Viskosität bei 100°C: 3584 mm²/s
Verdickungswirkung bei 100°C (10% in einem 150N-Öl): 11,02 mm²/s
Verdickungswirkung bei 40°C (10% in einem 150N-Öl): 59,60 mm²/s
Restmonomergehalt C12-C18 Alkylmethacrylat: 0,064 %
Restmonomergehalt MMA: 45 ppm
Restmonomergehalt Methacrylsäure: 9,5 ppm
Restmonomergehalt N-Vinylpyrrolidon: 0,045%

### Beispiel 4

### (Polyacrylat mit 1 Gew.% DMAPMAM im Polymerbackbone sowie 2 Gew.-% DMAPMAM im gepfropften Anteil)

In einem 2 Liter-Vierhalskolben ausgestattet mit Säbelrührer (betrieben mit 150 Umdrehungen pro Minute), Thermometer und Rückflusskühler werden 430 g 150N-Öl und 47,8 g einer Monomermischung aus C12-C18-Alkylmethacrylat, Methylmethacrylat und DMAPMAM im Gewichtsverhältnis 84,0/15,0/1,0 vorgelegt. Die Temperatur wird auf 100°C eingestellt. Nach Erreichen der 100°C werden 0,80 g tert-Butylperoctoat zugegeben und gleichzeitig ein Zulauf von 522,2 g einer Monomermischung aus C12-C18-Alkylmethmethacrylat, Methylmethacrylat, DMAPMAM im Gewichtsverhältnis 84,0/15,0/1,0 zusammen mit 4,44 g tert-Butylperoctoat gestartet. Die Zulaufzeit beträgt 3,5 Stunden und die Zulaufgeschwindigkeit verläuft gleichmäßig. 2 Stunden nach Zulaufende werden nochmals 1,14 g tert-Butylperoctoat zugegeben. Die Gesamtreaktionszeit beträgt 8 Stunden. Danach werden bei 100°C 8,69 g 150N-Öl, 5,76 g DMAPMAM und 0,72 g tert-Butylperoctoat zugegeben. 1 Stunde danach werden nochmals 5,76 g DMAPMAM und 0,72 g tert-Butylperoctoat zugegeben. Die Gesamtreaktionszeit beträgt 8 Stunden. Man erhält ein homogen aussehendes Reaktionsprodukt.

## Patentansprüche

1. Konzentrat als Schmieröladditiv, **dadurch gekennzeichnet, dass** das Konzentrat 15 bis 85 Gew.-% eines oder mehrere Pfropfcopolymere enthält, enthaltend in der Hauptkette radikalisch polymerisierte Einheiten von
a) 0,01 bis 15 Gew.-% einer Verbindung der Formel (I) 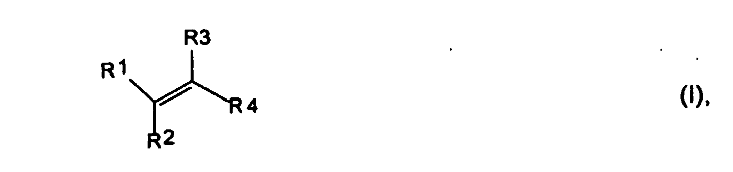 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist, und
b) 0 bis 40 Gew.-%, eines oder mehrerer (Meth)acrylate der Formel (II) 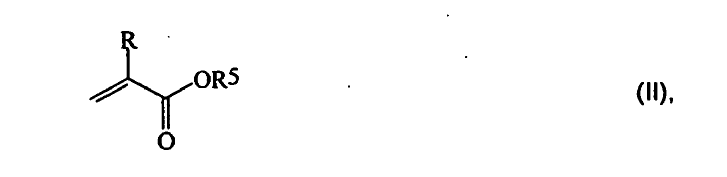 worin R Wasserstoff oder Methyl und R⁵ einen linearen oder verzweigten Alkylrest mit 1 bis 5 Kohlenstoffatomen bedeuten,
c) 35 bis 99,99 Gew.-% einer oder mehrerer ethylenisch ungesättigter Estewerbindungen der Formel (III) 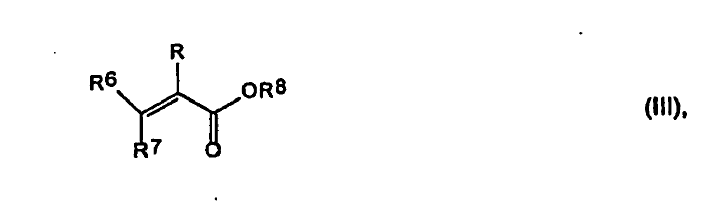 worin R Wasserstoff oder Methyl, R⁸ einen linearen, cyclischen oder verzweigten Alkylrest mit 6 bis 40 Kohlenstoffatomen, R⁶ und R⁷ unabhängig Wasserstoff oder eine Gruppe der Formel-COOR⁹ bedeuten, wobei R⁹ Wasserstoff oder einen linearen, cyclischen oder verzweigten Alkylrest mit 6 bis 40 Kohlenstoffatomen darstellt, und
d) 0 bis 40 Gew.-% eines oder mehrerer Comonomere,
wobei sich die Angabe Gew.-% der vorstehenden Komponenten auf das Gesamtgewicht der ethylenisch ungesättigten Monomere der Hauptkette bezieht und wobei auf die Hauptkette des Copolymers
a') 0,01 bis 25 New.-%, bezogen auf das Gesamtgewicht des Copolymers,
einer Verbindung der Formel (I) 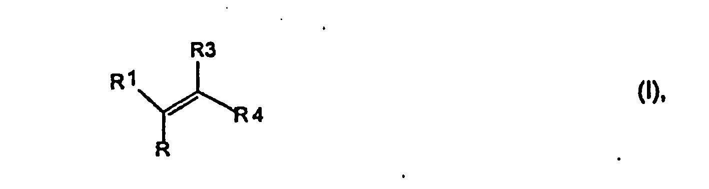 worin R¹, R² und R³ unabhängig voneinander Wasserstoff oder eine Alkylgruppe mit 1 bis 5 Kohlenstoffatomen sein können und R⁴ eine Gruppe darstellt, die eine oder mehrere zur Bildung von H-Brücken befähigte Struktureinheiten besitzt und ein H-Donator ist, und
b') 0 bis 20 Gew.-%, bezogen auf das Gesamtgewicht des Copolymers,
einer oder mehrerer Verbindungen der Formel (IV) gepfropft werden 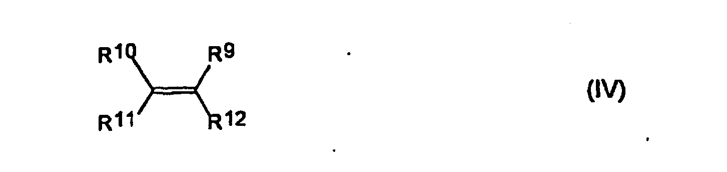 worin R⁹, R¹⁰ und R¹¹ unabhängig voneinander Wasserstoff oder eine Alkylgruppe mit 1 bis 5 Kohlenstoffatomen sein können
und R¹² entweder
eine Gruppe C(O)OR¹³ darstellt und R¹³ einen mit mindestens einer-NR¹⁴R¹⁵-Gruppe substituierten linearen oder verzweigten Alkylrest mit 2 bis 20, vorzugsweise 2 bis 6 Kohlenstoffatomen bedeuten, wobei R¹⁴ und
R¹⁵ unabhängig von einander für Wasserstoff, einen Alkylrest mit 1 bis 20, vorzugsweise 1 bis 6 Kohlenstoffatomen stehen oder worin R¹⁴ und R¹⁵ unter Einbeziehung des Stickstoffatoms und gegebenenfalls eines weiteren Stickstoff- oder Sauerstoffatoms einen 5- oder 6-gliederigen Ring bilden,
der gegebenenfalls mit C₁-C₆-Alkyl substituiert sein kann,
oder R¹² eine Gruppe NR¹⁶C(=O)R¹⁷ darstellt, wobei R¹⁶ und R¹⁷ zusammen eine Alkylengruppe mit 2 bis 6, vorzugsweise 2 bis 4 Kohlenstoffatomen bilden, wobei sie einen 4 bis 8-gliedrigen,
vorzugsweise 4 bis 6-gliedrigen gesättigten oder ungesättigten Ring bilden, gegebenenfalls unter Einbeziehung eines weiteren Stickstoff oder Sauerstoffatoms , wobei dieser Ring noch gegebenenfalls mit C₁-C₆-Alkyl substituiert sein kann
oder eine oder mehrere der Verbindungen: 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimldazol,
N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran,
Vinylthiophen, Vinylthiolan, Vinylthiazole und hydrierte Vinylthiazole, Vinyloxazole und hydrierte Vinyloxazole gepfropft werden.

2. Konzentrat nach Anspruch 1, **dadurch gekennzeichnet, dass** die zur Bildung von H-Brücken befähigte Struktureinheit R⁴ eine Carboxylgruppe, eine gegebenenfalls substituierte Carbonsäureamidgruppe oder ein mit einer Dialkylaminogruppe substituiertes Carbonsäureamid darstellt.

3. Konzentrat gemäß Anspruch 1 oder 2, **dadurch gekennzeichnet, dass** die zur Bildung von H-Brücken befähigte Verbindung der Formel (I) Methacrylsäure, Acrylsäure, Dimethylaminopropylmethacrylamid oder Dimethylaminoethylmethacrylamid ist.

4. Konzentrat gemäß einem der vorstehenden Ansprüche, **dadurch gekennzeichnet, dass** das Gewichtsmittel des Molekulargewichtes 5,000 - 4,000,000 g/mol beträgt.

5. Konzentrat gemäß einem der vorstehenden Ansprüche, **dadurch gekennzeichnet, dass** 10 bis 80 Gew.-% des insgesamt eingesetzten Monomers der Formel (I) in der Polymerhauptkette eingebaut sind.

6. Konzentrat gemäß einem der vorstehenden Ansprüche, **dadurch gekennzeichnet, dass** der Anteil der Monomere der Formel (III) 70 bis 99,5 Gew.-%, bezogen auf das Gesamtgewicht der ethylenisch ungesättigten Monomere der Hauptkette, beträgt.

7. Konzentrat gemäß einem der vorstehenden Ansprüche, **dadurch gekennzeichnet, dass** das Monomer der Formel (II) Methylmethacrylat oder n-Butylmethacrylat oder eine Mischung aus beiden ist.

8. Konzentrat gemäß einem der vorstehenden Ansprüche, **dadurch gekennzeichnet, dass** das Monomer der Formel (III) eine oder mehrere Verbindungen, ausgewählt aus der Gruppe 2-Ethylhexylmethacrylat, Isononylmethacrylat, Isodecylmethacrylat, Dodecylmethacrylat, Tridecylmethacrylat, Pentadecylmethacrylat, Hexadecylmethacrylat und Octodecylmethacrylat ist.

9. Konzentrat gemäß einem der vorstehenden Ansprüche, **dadurch gekennzeichnet, dass** das weitere Comonomer d) entweder ein α-Olefin oder Styrol oder eine Mischung aus beiden ist.

10. Konzentrat gemäß einem der vorstehenden Ansprüche, **dadurch gekennzeichnet, dass** es sich bei dem Monomer der Formel (IV) um Dimethylaminoethylmethacrylat, Dimethylaminopropylmethacrylat, N-Morphollnoethylmethacrylat oder um eine heterocyclische Vinylverbindung wie 2-Vinylpyridin, 3-Vinylpyridin, 2-Methyl-5-vinylpyridin, 3-Ethyl-4-vinylpyridin, 2,3-Dimethyl-5-vinylpyridin,
Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole, oder um eine Mischung solcher Verbindungen handelt.

11. Verfahren zur Herstellung von Pfropfcopolymeren gemäß einem der vorstehenden Ansprüche, **dadurch gekennzeichnet, dass** im ersten Schritt die Hauptkette durch radikalische Polymerisation der Monomere a), c) und gegebenenfalls b) und/oder d) hergestellt wird und dass dann im zweiten Schritt eine weitere Menge eines oder mehrerer Monomere der Formel (I) auf die Hauptkette gepfropft wird.

12. Verfahren zur Herstellung von Pfropfcopolymeren nach Anspruch 11, **dadurch gekennzeichnet, dass** nach der Pfropfung eines öder mehrerer Monomere der Formel (I) ein weiterer Pfropfprozess mit einem oder mehreren Monomeren der Formel (IV) durchgeführt wird.

13. Verfahren zur Herstellung von Pfropfcopolymeren gemäß einem der Ansprüche 1 bis 10, **dadurch gekennzeichnet, dass** zunächst ein Pfropfprozess mit einem oder mehreren Monomeren der Formel (IV) durchgeführt wird, gefolgt von einem weiteren Pfropfprozess mit einem oder mehreren Monomeren der Formel (I).

14. Verfahren zur Herstellung von Pfropfcopolymeren gemäß einem der Ansprüche 1 bis 10, **dadurch gekennzeichnet, dass** ein Pfropfprozess unter Verwendung einer Mischung aus jewells einem oder mehreren Monomeren der Formeln (I) und (IV) durchgeführt wird.

15. Verfahren zur Herstellung von Pfropfcopolymeren gemäß Anspruch 11 oder 14, **dadurch gekennzeichnet, dass** der Pfropfprozess bis zu 5 mal nacheinander durchgeführt wird.

16. Konzentrat gemäß einem oder mehreren der Ansprüche 1 bis 10,
**dadurch gekennzeichnet, dass** das Konzentrat zusätzlich organische Lösungsmittel, insbesondere ein Mineralöl und/oder ein synthetisches Öl aufweist.

17. Schmierölzusammensetzung, enthaltend Pfropfcopolymere gemäß einem der Ansprüche 1 bis 10.

18. Schmierölzusammensetzung nach Anspruch 17, **dadurch gekennzeichnet, dass** die Pfropfcopolymeren gemäß einem der Ansprüche 1 bis 10 in einer Menge im Bereich von 0,2 bis 30 Gew-% vorhanden sind.

19. Schmierölzusammensetzung nach Anspruch 17 oder 18, **dadurch gekennzeichnet; dass** die Schmierölzusammensetzung weiterhin enthält:
25 bis 90 Gew.-% mineralisches und/oder synthetisches Grundöl, zusammengenommen 0,2 bis 20 Gew.-% von weiteren üblichen Additiven wie z. B. Stockpunkterniedriger, VI-Verbesserer, Alterungsschutzmittel, Detergentien, Dispergierhilfsmittel oder verschleißmindernde Komponenten.

20. Schmierölzusammensetzung nach einem der Ansprüche 17 bis 19, **dadurch gekennzeichnet, dass** diese zusätzlich 0,05-10,0 Gewichtsprozent eines Alkylalkoxylats der Formel (V) enthält. 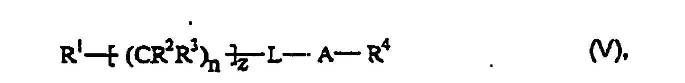 worin
R¹, R² und R³ unabhängig Wasserstoff oder ein Kohlenwassertstoffrest mit bis zu 40 Kohlenstoffatomen sind,
R⁴ Wasserstoff, ein Methyl- oder Ethylrest ist,
L eine verknüpfende Gruppe,
n eine ganze Zahl im Bereich von 4 bis 40,
A eine Alkoxygruppe mit 2 bis 25 wiederkehrende Einheiten, welche von Ethylenoxid, Propylenoxid und/oder Butylenoxid abgeleitet werden, wobei A Homopolymere sowie statistische Copolymere aus wenigstens
zwei der vorgenannten Verbindungen umfaßt, und
z 1 oder 2 ist,
wobei der unpolare Teil der Verbindung (V) der Formel (VI) 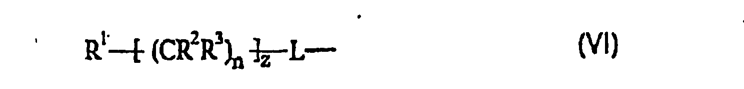 mindestens 9 Kohlenstoffatome enthält.

21. Verwendung von Pfropfcopolymeren gemäß einem der Ansprüche 1 bis 9 in Schmierölzusammensetzungen als dispergierender oder nichtdispergierender Viskositätsindexverbesserer, als detergierende oder nicht-detergierende Komponente, als Stockpunktverbesserer, als verschleißmindernde oder als durch die Verschleißminderung den Energieverbrauch verringernde Komponente.

## Claims

1. Concentrate as a lubricant oil additive, **characterized in that** the concentrate contains from 15 to 85% by weight of one or more graft copolymers containing, in the backbone, free-radically polymerized units of
a) from 0.01 to 15% by weight of a compound of the formula (I) 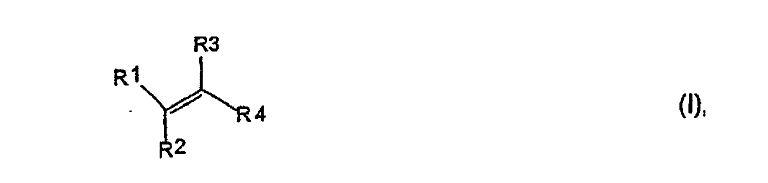 in which R¹, R² and R³ may each independently be hydrogen or an alkyl group having from 1 to 5 carbon atoms and R⁴ is a group which has one or more structural units capable of forming hydrogen bonds and is a hydrogen donor, and
b) from 0 to 40% by weight of one or more (meth)acrylates of the formula (II) 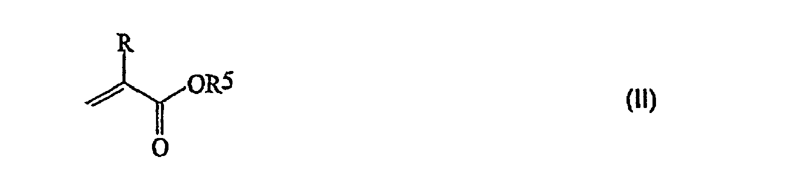 in which R is hydrogen or methyl and R⁵ is a linear or branched alkyl radical having from 1 to 5 carbon atoms,
c) from 35 to 99.99% by weight of one or more ethylenically unsaturated ester compounds of the formula (III) 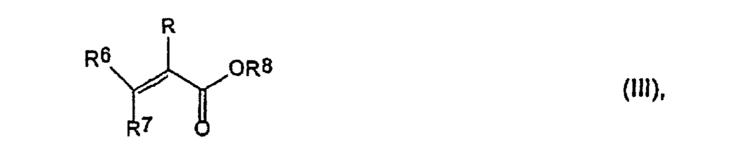 in which R is hydrogen or methyl, R⁸ is a linear, cyclic or branched alkyl radical having from 6 to 40 carbon atoms, R⁶ and R⁷ are each independently hydrogen or a group of the formula -COOR⁹ where R⁹ is hydrogen or a linear, cyclic or branched alkyl radical having from 6 to 40 carbon atoms, and
d) from 0 to 40% by weight of one or more comonomers,
where the percentage by weight of the above components is based on the total weight of the ethylenically unsaturated monomers of the backbone and where
a') from 0.01 to 25% by weight, based on the total weight of the copolymer, of a compound of the formula (I) 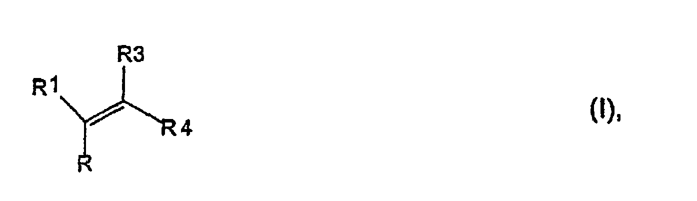 in which R¹, R² and R³ may each independently be hydrogen or an alkyl group having from 1 to 5 carbon atoms and R⁴ is a group which has one or more structural units capable of forming hydrogen bonds and is a hydrogen donor, and
b') from 0 to 20% by weight, based on the total weight of the copolymer, of one or more compounds of the formula (IV) 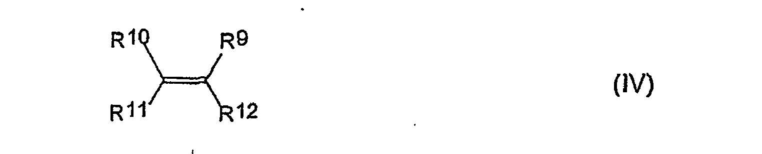 in which R⁹, R¹⁰ and R¹¹ may each independently be hydrogen or an alkyl group having from 1 to 5 carbon atoms
and R¹² is either a C(O)OR¹³ group and R¹³ is a linear or branched alkyl radical which is substituted by at least one -NR¹⁴R¹⁵ group and has from 2 to 20, preferably from 2 to 6 carbon atoms, where R¹⁴ and R¹⁵ are each independently hydrogen, an alkyl radical having from 1 to 20, preferably from 1 to 6, carbon atoms, or where R¹⁴ and R¹⁵, including the nitrogen atom and, if present, a further nitrogen or oxygen atom, form a 5- or 6-membered ring which may optionally be substituted by C₁-C₆-alkyl,
or R¹² is an NR¹⁶C(=)R¹⁷ group where R¹⁶ and R¹⁷ together form an alkylene group having from 2 to 6, preferably from 2 to 4 carbon atoms, where they form a 4- to 8-membered, preferably from 4- to 6- membered, saturated or unsaturated ring, if appropriate including a further nitrogen or oxygen atom, where this ring may also optionally be substituted by C₁-C₆-alkyl, or one or more of the compounds: 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles, and hydrogenated vinylthiazoles, vinyloxazoles and hydrogenated vinyloxazoles, are grafted onto the backbone of the copolymer.

2. Concentrate according to Claim 1, **characterized in that** the structural unit R⁴ capable of forming hydrogen bonds is a carboxyl group, an optionally substituted carboxamide group or a carboxamide substituted by a dialkylamino group.

3. Concentrate according to Claim 1 or 2, **characterized in that** the compound of the formula (I) capable of forming hydrogen bonds is methacrylic acid, acrylic acid, dimethylaminopropylmethacrylamide or dimethylaminoethylmethacrylamide.

4. Concentrate according to one of the preceding claims, **characterized in that** the weight-average molecular weight is 5000-4 000 000 g/mol.

5. Concentrate according to one of the preceding claims, **characterized in that** from 10 to 80% by weight of the monomer of the formula (I) used overall is incorporated in the polymer backbone.

6. Concentrate according to one of the preceding claims, **characterized in that** the proportion of the monomer of the formula (III) is from 70 to 99.5% by weight based on the total weight of the ethylenically unsaturated monomers of the backbone.

7. Concentrate according to one of the preceding claims, **characterized in that** the monomer of the formula (II) is methyl methacrylate or n-butyl methacrylate or a mixture of the two.

8. Concentrate according to one of the preceding claims, **characterized in that** the monomer of the formula (III) is one or more compounds selected from the group of 2-ethylhexyl methacrylate, isononyl methacrylate, isodecyl methacrylate, dodecyl methacrylate, tridecyl methacrylate, pentadecyl methacrylate, hexadecyl methacrylate and octadecyl methacrylate.

9. Concentrate according to one of the preceding claims, **characterized in that** the further comonomer d) is either an α-olefin or styrene or a mixture of the two.

10. Concentrate according to one of the preceding claims, **characterized in that** the monomer of the formula (IV) is dimethylaminoethyl methacrylate, dimethylaminopropyl methacrylate, N-morpholinoethyl methacrylate or a heterocyclic vinyl compound such as 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles, or a mixture of such compounds.

11. Process for preparing graft copolymers according to one of the preceding claims, **characterized in that**, in the first step, the backbone is prepared by free-radical polymerization of the monomers a), c) and optionally b) and/or d) and **in that** a further amount of one or more of the monomers of the formula (I) is then grafted onto the backbone in the second step.

12. Process for preparing graft copolymers according to Claim 11, **characterized in that**, after the grafting of one or more monomers of the formula (I), a further grafting process is carried out with one or more monomers of the formula (IV).

13. Process for preparing graft copolymers according to one of Claims 1 to 10, **characterized in that** a grafting process is first carried out with one or more monomers of the formula (IV), followed by a further grafting process with one or more monomers of the formula (I).

14. Process for preparing graft copolymers according to one of Claims 1 to 10, **characterized in that** a grafting process is carried out using a mixture of in each case one or more monomers of the formulae (I) and (IV).

15. Process for preparing graft copolymers according to Claim 11 or 14, **characterized in that** the grafting process is carried out up to 5 times in succession.

16. Concentrate according to one or more of Claims 1 to 10, **characterized in that** the concentrate additionally comprises organic solvents, in particular a mineral oil and/or a synthetic oil.

17. Lubricant oil composition comprising graft copolymers according to one of Claims 1 to 10.

18. Lubricant oil composition according to Claim 17, **characterized in that** the graft copolymers according to one of Claims 1 to 10 are present in an amount in the range from 0.2 to 30% by weight.

19. Lubricant oil composition according to Claim 17 or 18, **characterized in that** the lubricant oil composition further comprises:
from 25 to 90% by weight of mineral and/or
synthetic base oil, all together from 0.2 to 20% by weight of further customary additives, for example pour point depressants, VI improvers,
aging stabilizers, detergents, dispersing assistants or wear-reducing components.

20. Lubricant oil composition according to one of Claims 17 to 19, **characterized in that** it additionally contains 0.05-10.0 percent by weight of an alkyl alkoxylate of the formula (V) 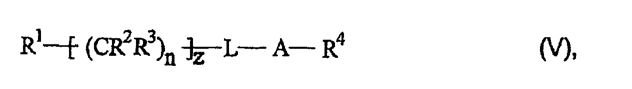 in which
R¹, R² and R³ are each independently hydrogen or a hydrocarbon radical having up to 40 carbon atoms, R⁴ is hydrogen, a methyl or ethyl radical,
L is a linking group,
n is an integer in the range from 4 to 40,
A is an alkoxy group having from 2 to 25 repeat units which are derived from ethylene oxide, propylene oxide and/or butylene oxide, where A includes homopolymers and random copolymers of at least two of the aforementioned compounds, and
z is 1 or 2,
where the nonpolar moiety of the compound of the formula (V) of the formula (VI) 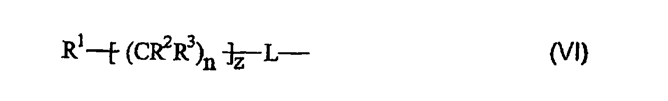 contains at least 9 carbon atoms.

21. Use of graft copolymers according to one of claims 1 to 9 in lubricant oil compositions as a dispersing or nondispersing viscosity index improver, as a detersive or nondetersive component, as a pour point improver, as a wear-reducing component or as a component which reduces energy consumption by reducing wear.

## Revendications

1. Concentré en tant qu'additif pour huile de graissage, **caractérisé en ce qu'**il contient de 15 à 85 % en poids d'un ou plusieurs copolymères greffés, contenant dans la chaîne principale des motifs, polymérisables par voie radicalaire, de
a) 0,01 à 15 % en poids d'un composé de formule (I) 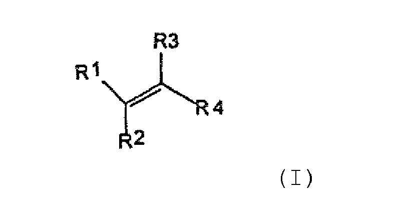 dans laquelle R¹, R² et R³ peuvent être, chacun indépendamment, un atome d'hydrogène ou un groupe alkyle ayant de 1 à 5 atomes de carbone et R⁴ représente un groupe qui possède une ou plusieurs unités structurales aptes à former des ponts hydrogène et est un donneur d'hydrogène, et
b) 0 à 4 0 % en poids d'un ou plusieurs (méth)acrylates de formule (II) 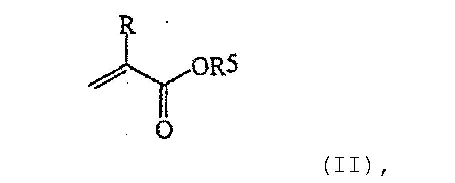 dans laquelle R représente un atome d'hydrogène ou un groupe méthyle et R⁵ représente un radical alkyle linéaire ou ramifié ayant de 1 à 5 atomes de carbone,
c) 35 à 99,99 % en poids d'un ou plusieurs composés de type ester à insaturation éthylénique de formule (III) 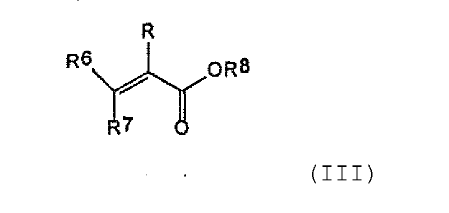 dans laquelle R représente un atome d'hydrogène ou un groupe méthyle, R⁸ représente un radical alkyle linéaire, cyclique ou ramifié ayant de 6 à 40 atomes de carbone, R⁶ et R⁷ représentent, indépendamment l'un de l'autre, un atome d'hydrogène ou un groupe de formule -COOR⁹, R⁹ représentant un atome d'hydrogène ou un radical alkyle linéaire, cyclique ou ramifié ayant de 6 à 40 atomes de carbone, et
d) 0 à 40 % en poids d'un ou plusieurs comonomères, les pourcentages en poids des composants précédents étant donnés par rapport au poids total des monomères à insaturation éthylénique de la chaîne principale, et sur la chaîne principale du copolymère étant greffés
a') de 0,01 à 25 % en poids, par rapport au poids total du copolymère, d'un composé de formule (I) 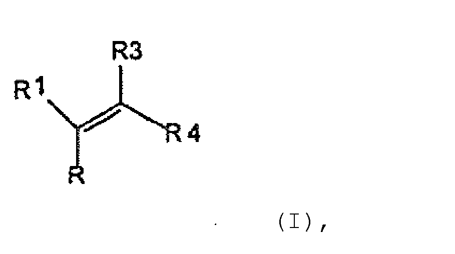 dans laquelle R¹, R² et R³ peuvent être, chacun indépendamment, un atome d'hydrogène ou un groupe alkyle ayant de 1 à 5 atomes de carbone et R⁴ représente un groupe qui possède une ou plusieurs unités structurales aptes à former des ponts hydrogène et est un donneur d'hydrogène, et
b') de 0 à 20 % en poids, par rapport au poids total du copolymère, d'un ou plusieurs composés de formule (IV) 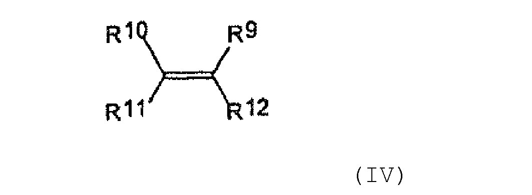 dans laquelle R⁹, R¹⁰ et R¹¹ peuvent être, chacun indépendamment, un atome d'hydrogène ou un groupe alkyle ayant de 1 à 5 atomes de carbone
et soit R¹² représente
un groupe C(O)OR¹³ et R¹³ représente un radical alkyle linéaire ou ramifié ayant de 2 à 20, de préférence de 2 à 6 atomes de carbone, substitué par au moins un groupe NR¹⁴R¹⁵, R¹⁴ et R¹⁵, représentant, indépendamment l'un de l'autre, un atome d'hydrogène, un radical alkyle ayant de 1 à 20, de préférence 1 à 6 atomes de carbone ou R¹⁴ et R¹⁵ formant, avec inclusion de l'atome d'azote et éventuellement d'un autre atome d'azote ou d'oxygène, un cycle à 5 ou 6 chaînons, qui peut éventuellement être substitué par alkyle en C₁-C₆,
soit R¹² représente un groupe NR¹⁶C(=O)R¹⁷ R¹⁶ et R¹⁷ formant ensemble un groupe alkylène ayant de 2 à 6, de préférence de 2 à 4 atomes de carbone, de sorte qu'ils forment un cycle saturé ou insaturé à 4-8 chaînons, de préférence à 4-6, chaînons, éventuellement avec inclusion d'un autre atome d'azote ou d'oxygène, ce cycle pouvant éventuellement être encore substitué par alkyle en C₁-C₆
ou d'un ou plusieurs des composés : 2-vinylpyridine, 3-vinylpyridine, 2-méthyl-5-vinylpyridine, 3-éthyl-4-vinylpyridine, 2,3-diméthyl-5-vinylpyridine, vinylpyrimidine, vinylpipéridine, 9-vinylcarbazole, 3-vinylcarbazole, 4-vinylcarbazole, 1-vinylimidazole, 2-méthyl-1-vinylimidazole, N-vinylpyrrolidone, 2-vinylpyrrolidone, N-vinylpyrrolidine, 3-vinylpyrrolidine, N-vinylcaprolactame, N-vinylbutyrolactame, vinyloxolane, vinylfuranne, vinylthiophène, vinylthiolane, vinylthiazoles et vinylthiazoles hydrogénés, vinyloxazoles et vinyloxazoles hydrogénés.

2. Concentré selon la revendication 1, **caractérisé en ce que** l'unité structurale R⁴ apte à la formation de ponts hydrogène représente un groupe carboxy, un groupe carboxamido éventuellement substitué ou un carboxamide substitué par un groupe dialkylamino.

3. Concentré selon la revendication 1 ou 2, **caractérisé en ce que** le composé de formule (I) apte à la formation de ponts hydrogène est l'acide méthacrylique, l'acide acrylique, le diméthylaminopropylméthacrylamide ou le diméthylaminoéthylméthacrylamide.

4. Concentré selon l'une quelconque des revendications précédentes, **caractérisé en ce que** la moyenne en poids de la masse moléculaire va de 5 000 à 4 000 000 g/mole.

5. Concentré selon l'une quelconque des revendications précédentes, **caractérisé en ce que** 10 à 80 % en poids du monomère de formule (I) utilisé au total sont incorporés dans la chaîne principale du polymère.

6. Concentré selon l'une quelconque des revendications précédentes, **caractérisé en ce que** la proportion des monomères de formule (III) va de 70 à 99,5 % en poids, par rapport au poids total des monomères à insaturation éthylénique de la chaîne principale.

7. Concentré selon l'une quelconque des revendications précédentes, **caractérisé en ce que** le monomère de formule (II) est le méthacrylate de méthyle ou le méthacrylate de n-butyle ou un mélange de ceux-ci.

8. Concentré selon l'une quelconque des revendications précédentes, **caractérisé en ce que** le monomère de formule (III) consiste en un ou plusieurs composés choisi(s) dans le groupe constitué par le méthacrylate de 2-éthylhexyle, le méthacrylate d'isononyle, le méthacrylate d'isodécyle, le méthacrylate de dodécyle, le méthacrylate de tridécyle, le méthacrylate de pentadécyle, le méthacrylate d'hexadécyle et le méthacrylate d'octadécyle.

9. Concentré selon l'une quelconque des revendications précédentes, **caractérisé en ce que** l'autre comonomère d) est soit une α-oléfine, soit le styrène ou un mélange des deux.

10. Concentré selon l'une quelconque des revendications précédentes, **caractérisé en ce que** le monomère de formule (IV) consiste en méthacrylate de diméthylaminoéthyle, méthacrylate de diméthylaminopropyle, méthacrylate de N-morpholinoéthyle ou en un composé vinylique hétérocyclique tel que la 2-vinylpyridine, la 3-vinylpyridine, la 2-méthyl-5-vinylpyridine, la 3-éthyl-4-vinylpyridine, la 2,3-diméthyl-5-vinylpyridine, la vinylpyrimidine, la vinylpipéridine, le 9-vinylcarbazole, le 3-vinylcarbazole, le 4-vinylcarbazole, le 1-vinylimidazole, le 2-méthyl-1-vinylimidazole, la N-vinylpyrrolidone, la 2-vinylpyrrolidone, la N-vinylpyrrolidine, la 3-vinylpyrrolidine, le N-vinylcaprolactame, le N-vinylbutyrolactame, le vinyloxolane, le vinylfuranne, le vinylthiophène, le vinylthiolane, les vinylthiazoles et vinylthiazoles hydrogénés, les vinyloxazoles et vinyloxazoles hydrogénés, ou en mélange de tels composés.

11. Procédé pour la préparation de copolymères greffés selon l'une quelconque des revendications précédentes, **caractérisé en ce que** dans la première étape on prépare la chaîne principale par polymérisation radicalaire des monomères a), c) et éventuellement b) et/ou d) et **en ce qu'**ensuite dans la deuxième étape on greffe une nouvelle quantité d'un ou plusieurs monomères de formule (I) sur la chaîne principale.

12. Procédé pour la préparation de copolymères greffés selon la revendication 11, **caractérisé en ce qu'**après le greffage d'un ou plusieurs monomères de formule (I) on effectue un autre processus de greffage avec un ou plusieurs monomères de formule (IV).

13. Procédé pour la préparation de copolymères greffés selon l'une quelconque des revendications 1 à 10, **caractérisé en ce que** d'abord on effectue un processus de greffage avec un ou plusieurs monomères de formule (IV), suivi d'un nouveau processus de greffage avec un ou plusieurs monomères de formule (I).

14. Procédé pour la préparation de copolymères greffés selon l'une quelconque des revendications 1 à 10, **caractérisé en ce qu'**on effectue un processus de greffage avec utilisation d'un mélange de, respectivement, un ou plusieurs monomères de formules (I) et (IV).

15. Procédé pour la préparation de copolymères greffés selon la revendication 11 ou 14, **caractérisé en ce qu'**on effectue le processus de greffage jusqu'à 5 fois successivement.

16. Concentré selon une ou, plusieurs des revendications 1 à 10, **caractérisé en ce que** le concentré comporte en outre des solvants organiques, en particulier une huile minérale et/ou une huile synthétique.

17. Composition d'huile de graissage, contenant des copolymères greffés selon l'une quelconque des revendications 1 à 10.

18. Composition d'huile de graissage selon la revendication 17, **caractérisée en ce que** les copolymères greffés selon l'une quelconque des revendications 1 à 10 sont présents en une quantité dans la plage allant de 0,2 à 30 % en poids.

19. Composition d'huile de graissage selon la revendication 17 ou 18, **caractérisée en ce que** la composition d'huile de graissage contient en outre :
25 à 90 % en poids d'huile minérale et/ou synthétique de base, pris ensemble 0,2 à 20 % en poids d'autres additifs usuels, comme par exemple des additifs abaissant le point d'écoulement, des additifs améliorant l'indice de viscosité, des agents antivieillissement, des détergents, des adjuvants de dispersion ou des composants réduisant le frottement.

20. Composition d'huile de graissage selon l'une quelconque des revendications 17 à 19, **caractérisée en ce qu'**elle contient en outre de 0,05 à 10,0 % en poids d'un produit d'alkylalcoxylation de formule (V)
R¹-[-(CR²R³)ₙ-]_{z}-L-A-R⁴ (V),
dans laquelle
R¹, R² et R³ représentent, chacun indépendamment, un atome d'hydrogène ou un radical hydrocarboné ayant jusqu'à 40 atomes de carbone,
R⁴ est un atome d'hydrogène, un radical méthyle ou éthyle,
L représente un groupe de liaison,
n est un nombre entier dans la plage de 4 à 40,
A représente un groupe alcoxy comportant de 2 à 25 motifs répétitifs qui sont dérivés de l'oxyde d'éthylène, de l'oxyde de propylène et/ou de l'oxyde de butylène, A comprenant des homopolymères ainsi que des copolymères statistiques d'au moins deux des composés précités, et
z est 1 ou 2,
la partie non polaire du composé (V) de formule (VI)
R¹-[-(CR²R³)ₙ-]_{z}-L- (VI)
contenant au moins 9 atomes de carbone.

21. Utilisation de copolymères greffés selon l'une quelconque des revendications 1 à 9, dans des compositions d'huile de graissage, en tant qu'additif améliorant l'indice de viscosité, dispersant ou non dispersant, en tant que composant détergent ou non détergent, en tant qu'additif abaissant le point d'écoulement, en tant que composant réduisant le frottement ou en tant que composant réduisant la consommation d'énergie par la réduction du frottement.
